(19) 

Europäisches Patentamt

European Patent Office

Office européen des brevets

(11) **EP 4 322 612 A1**

(12) **EUROPEAN PATENT APPLICATION**
published in accordance with Art. 153(4) EPC

(43) Date of publication:
**14.02.2024 Bulletin 2024/07**

(21) Application number: **22807752.5**

(22) Date of filing: **09.05.2022**

(51) International Patent Classification (IPC):
*H04W 36/00* (2009.01)    *H04W 36/08* (2009.01)
*H04W 16/28* (2009.01)

(52) Cooperative Patent Classification (CPC):
**H04W 16/28; H04W 36/00; H04W 36/08**

(86) International application number:
**PCT/KR2022/006583**

(87) International publication number:
**WO 2022/240104 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2021 KR 20210060330**

(71) Applicant: **Samsung Electronics Co., Ltd.**
**Suwon-si, Gyeonggi-do 16677 (KR)**

(72) Inventors:
• **JIN, Seungri**
**Suwon-si, Gyeonggi-do 16677 (KR)**
• **AGIWAL, Anil**
**Suwon-si, Gyeonggi-do 16677 (KR)**

(74) Representative: **Nederlandsch Octrooibureau**
**P.O. Box 29720**
**2502 LS The Hague (NL)**

(54) **METHOD AND DEVICE FOR SUPPORTING INTER-CELL MOVEMENT BASED ON L1 AND L2 IN WIRELESS COMMUNICATION SYSTEM**

(57) The present disclosure relates to a 5th-generation (5G) or 6th-generation (6G) communication system for supporting higher data rates. A user equipment (UE) according to an embodiment of the present disclosure may receive configuration information about channel measurement for supporting an additional cell, perform, based on the configuration information about the channel measurement, channel measurement on at least one additional cell configured for the UE, receive a medium access control (MAC) control element (CE) indicating beam switching by the UE, based on a report on the channel measurement, and perform transmission or reception of data by using a beam switched based on the received MAC CE.

FIG. 1I

Connected UE

RECEIVE RRC RECONFIGURATION (NON-SERVING CELL CONFIGURATION INFORMATION) — 1i-05

PERFORM NON-SERVING CELL L1 CHANNEL MEASUREMENT AND REPORTING — 1i-10

INDICATE TCI UPDATE TO NON-SERVING CELL (MAC CE OR DCI) — 1i-15

MAINTAIN CONNECTION WITH CURRENT SERVING CELL AND TRANSMIT AND RECEIVE DATA VIA CORRESPONDING BEAM AFTER BEAM SWITCHING TO INDICATED TCI STATE — 1i-20

PERFORM L3 MEASUREMENT AND REPORTING — 1i-25

RECEIVE HANDOVER COMMAND — 1i-30

EP 4 322 612 A1

**Description**

Technical Field

The present disclosure relates to a wireless communication system, and more particularly, to a method and device for supporting inter-cell mobility in the wireless communication system.

Background Art

5th-generation (5G) mobile communication technologies define broad frequency bands such that high transmission rates and new services are possible, and can be implemented in not only sub-6 gigahertz (GHz) bands such as 3.5 GHz but also in ultra-high ('above 6 GHz') frequency bands referred to as millimeter wave (mmWave) bands such as 28 GHz and 39 GHz. In addition, for 6th-generation (6G) mobile communication technology referred to as beyond 5G systems, implementation in terahertz (THz) bands (e.g., a frequency range between 95 GHz and 3 THz) is under consideration to achieve data rates that are fifty times higher than 5G mobile communication technologies and ultra-low latencies that are one-tenth of the latencies thereof.

At the beginning of the development of 5G mobile communication technologies, in order to support services and satisfy performance requirements in connection with enhanced mobile broadband (eMBB), ultra-reliable low-latency communications (URLLC), and massive machine-type communications (mMTC), there has been ongoing standardization regarding beamforming and massive multiple-input multiple-output (MIMO) for mitigating a radio-wave path loss and increasing radio-wave transmission distances in an ultra-high frequency band, support of various numerologies (operating multiple subcarrier spacings, etc.) and dynamic operation of slot formats for efficient utilization of ultra-high frequency resources, initial access technologies for supporting multi-beam transmission and broadbands, definition and operation of a bandwidth part (BWP), new channel coding schemes such as low-density parity-check (LDPC) code for massive data transmission and polar code for highly reliable transmission of control information, layer 2 (L2) pre-processing, network slicing for providing a dedicated network specialized for a specific service, etc.

Currently, there are ongoing discussions regarding improvement and performance enhancement of initial 5G mobile communication technologies in consideration of services that the 5G mobile communication technologies was intended to support, and there has been physical layer standardization regarding technologies such as vehicle-to-everything (V2X) for enabling autonomous vehicles to make driving decisions based on information about their own positions and statuses transmitted by the vehicles and for increasing user convenience, new radio unlicensed (NR-U) aiming at enabling system operations that meet various regulatory requirements in unlicensed bands, NR user equipment (UE) power saving, non-terrestrial network (NTN) that is UE-satellite direct communication for providing coverage in areas where communication with terrestrial networks is unavailable, positioning, etc.

Furthermore, there has been ongoing standardization in the field of radio interface architecture/ protocol with respect to technologies such as industrial Internet of things (IIoT) for supporting new services through linkage and convergence with other industries, integrated access and backhaul (IAB) for providing a node for network service area expansion by supporting a wireless backhaul link integrated with an access link, mobility enhancement including conditional handover and dual active protocol stack (DAPS) handover, and 2-step random access (2-step random access channel (RACH) for NR) for simplifying random access procedures, and standardization has also been ongoing in the field of system architecture/service with respect to a 5G baseline architecture (e.g., service based architecture or service based interface) for combining network functions virtualization (NFV) and software-defined networking (SDN) technologies, and mobile edge computing (MEC) for receiving services based on the location of a UE.

When these 5G mobile communication systems are commercialized, connected devices that have been exponentially increasing will be connected to communication networks, and accordingly, it is expected that enhancement of the functions and performance of the 5G mobile communication systems and integrated operations of connected devices will be required. To this end, new research will be conducted on extended reality (XR) for efficiently supporting augmented reality (AR), virtual reality (VR), mixed reality (MR), etc., 5G performance enhancement and complexity reduction by utilizing artificial intelligence (AI) and machine learning (ML), AI service support, metaverse service support, drone communication, etc.

Furthermore, such advancements in 5G mobile communication systems will serve as a basis for developing not only technologies for securing coverage offered by 6G mobile communication technologies in THz bands, such as novel waveforms and multi-antenna transmission technologies such as full dimensional MIMO (FD-MIMO), array antennas, and large-scale antennas, and technologies for improving the coverage of THz band signals, such as metamaterial-based lenses and antennas, high-dimensional spatial multiplexing technology using orbital angular momentum (OAM), and reconfigurable intelligent surface (RIS), but also technologies for increasing frequency efficiency and improving system networks in the 6G mobile communication technologies, which include full-duplex technology, satellites, AI-based communication technologies for realizing system optimization by utilizing AI from the design stage and internalizing end-to-end AI support functions, next-generation distributed computing technologies for realizing services of a complexity level beyond the limits of UE computing capabilities by utilizing ultra-high performance communication and computing resources, etc.

Disclosure

Technical Problem

The present disclosure is to provide an efficient method for moving from a serving cell to another cell.

Technical Solution

The present disclosure relates to a 5th-generation (5G) or 6th-generation (6G) communication system for supporting higher data rates. A user equipment (UE) according to an embodiment of the present disclosure may receive configuration information about channel measurement for supporting an additional cell, perform, based on the configuration information about the channel measurement, channel measurement on at least one additional cell configured for the UE, receive a medium access control (MAC) control element (CE) indicating beam switching by the UE, based on a report on the channel measurement, and perform transmission or reception of data by using a beam switched based on the received MAC CE.

Advantageous Effects

The disclosed embodiments provide a device and method capable of effectively providing a service in a wireless communication system.

Description of Drawings

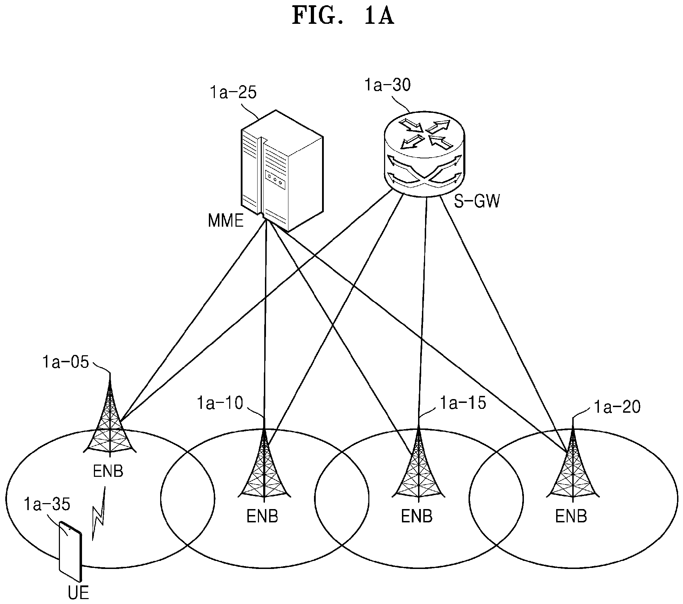

FIG. 1A illustrates a structure of a long-term evolution (LTE) system according to an embodiment of the present disclosure.

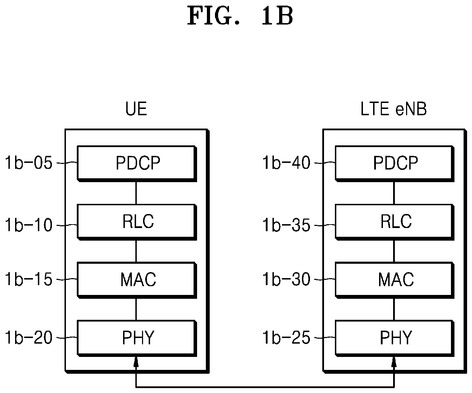

FIG. 1B illustrates a radio protocol architecture for an LTE system, according to an embodiment of the present disclosure.

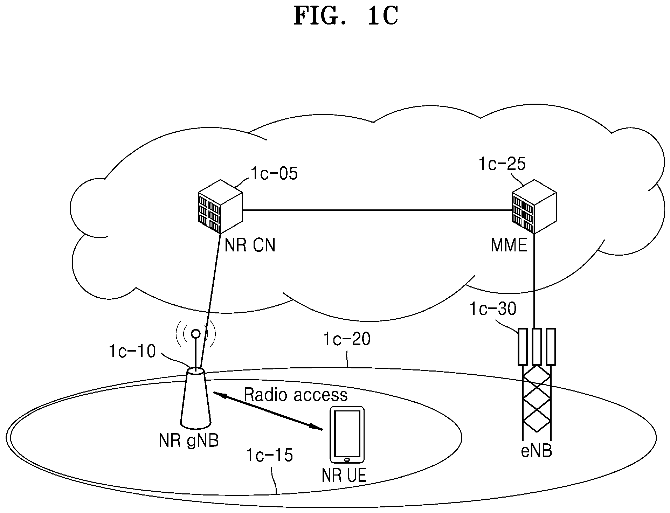

FIG. 1C illustrates a structure of a next-generation mobile communication system according to an embodiment of the present disclosure.

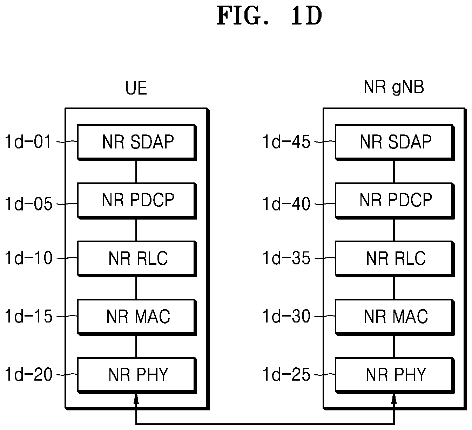

FIG. 1D illustrates a radio protocol architecture for a next-generation mobile communication system, according to an embodiment of the present disclosure.

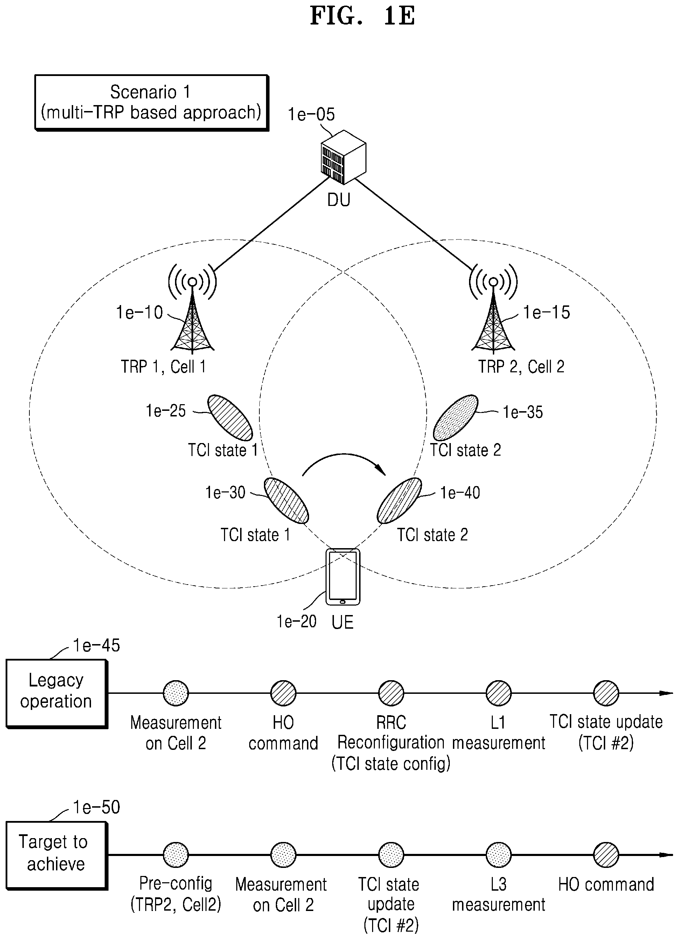

FIG. 1E is a diagram illustrating a scenario in which a user equipment (UE) transmits and receives data by using a beam from a transmission/reception point (TRP) of a cell that supports Layer 1 (L1)/Layer 2 (L2) based beam switching, while the UE maintains a connection to a serving cell, according to a first embodiment of the present disclosure.

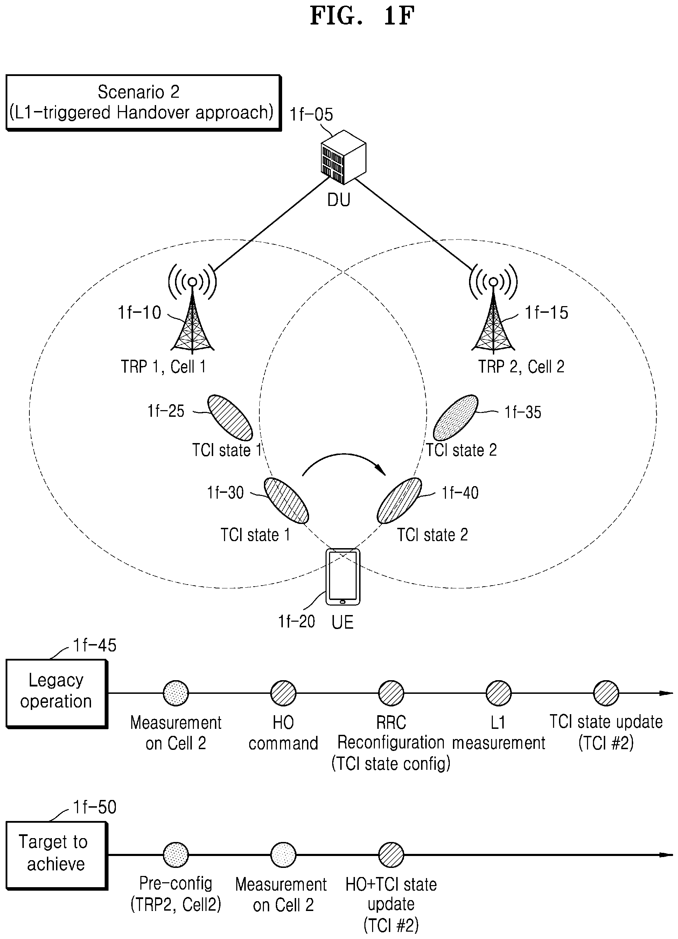

FIG. 1F is a diagram illustrating a scenario in which a UE transmits and receives data by changing a beam and a serving cell to a TRP of a cell that supports L1/L2 based beam switching, according to a second embodiment of the present disclosure.

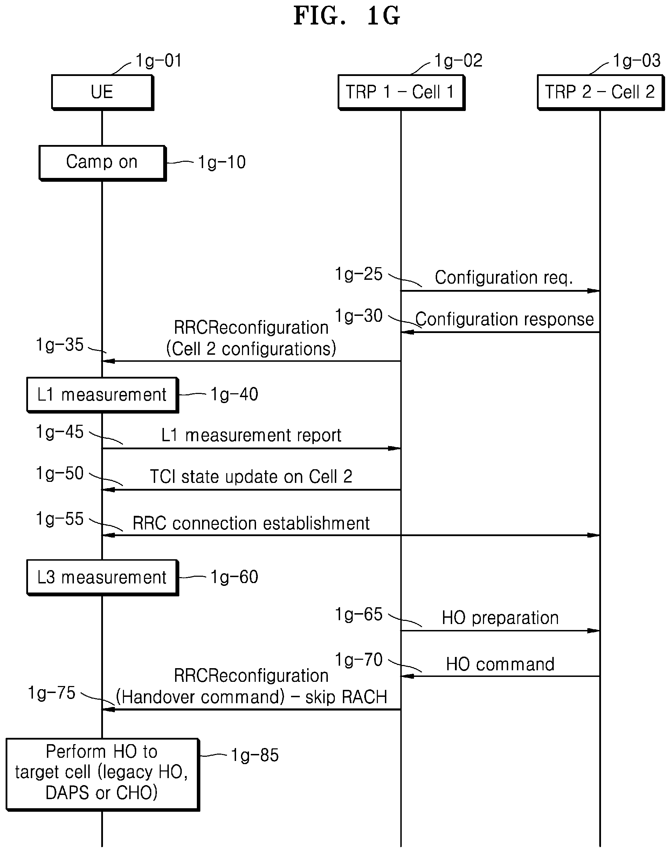

FIG. 1G is a diagram illustrating an overall operation according to a first embodiment of the present disclosure.

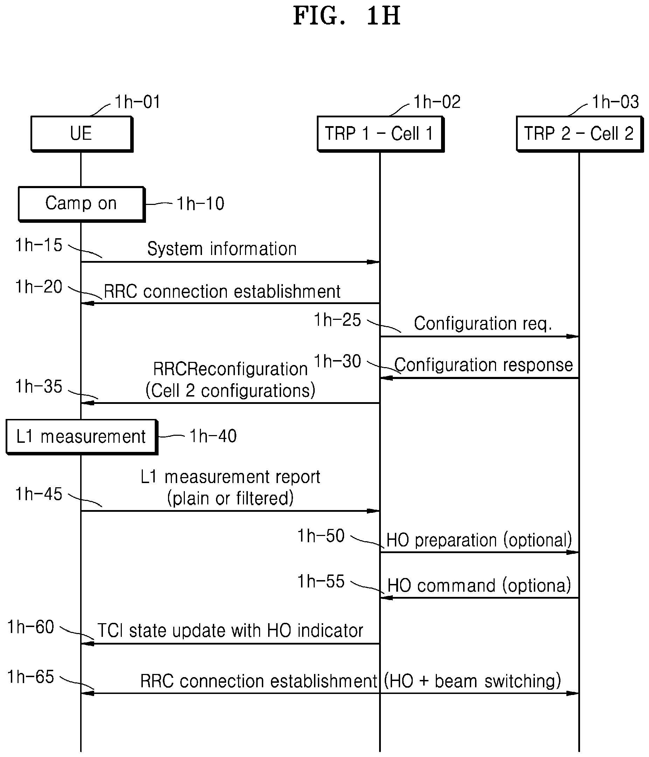

FIG. 1H is a diagram illustrating an overall operation according to a second embodiment of the present disclosure.

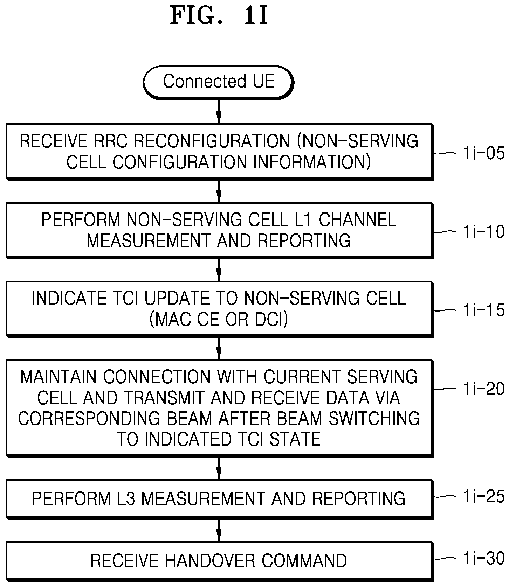

FIG. 1I illustrates an operation of a UE according to a first embodiment of the present disclosure, i.e., operations in which the UE performs L1/L2 based beam switching.

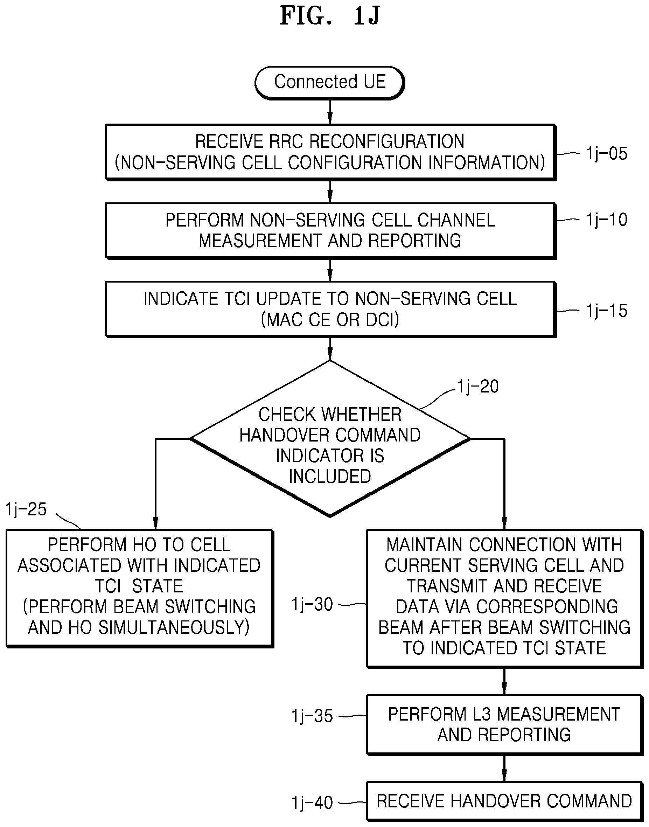

FIG. 1J illustrates operations in which a UE performs L1/L2 based beam switching and a handover, according to a second embodiment of the present disclosure.

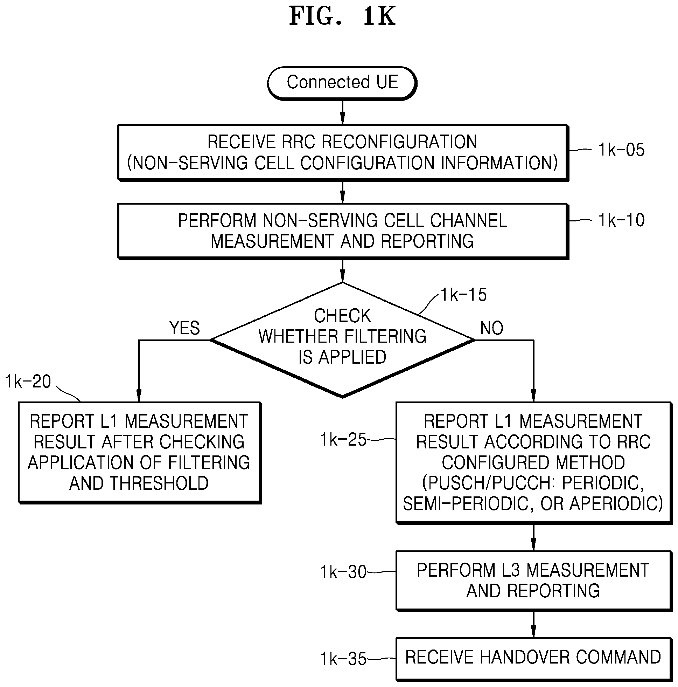

FIG. 1K illustrates a method, performed by a UE, of performing channel measurement and reporting, which is applied to embodiments of the present disclosure.

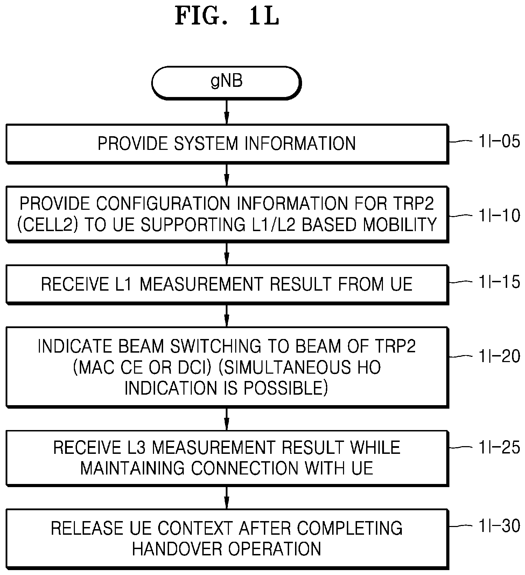

FIG. 1L illustrates operations of a base station, which are applied to embodiments of the present disclosure.

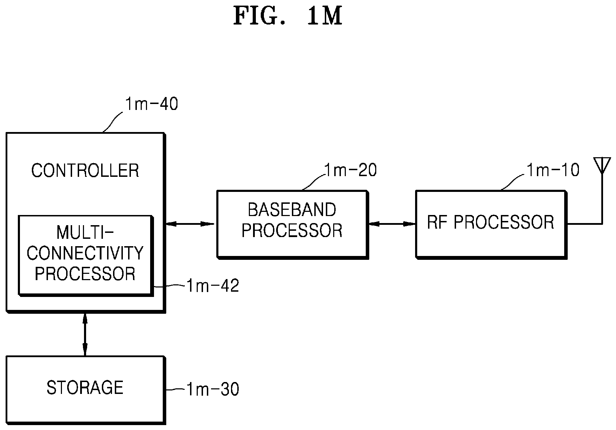

FIG. 1M is a block diagram of an internal structure of a UE according to an embodiment of the present disclosure.

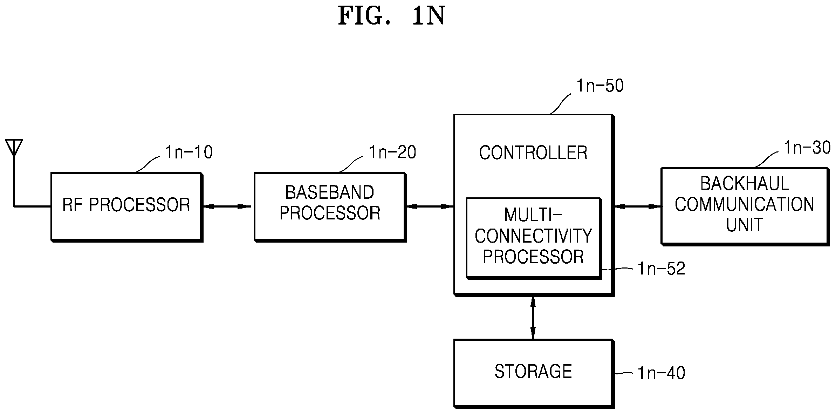

FIG. 1N is a block diagram of a configuration of a base station according to an embodiment of the present disclosure.

Best Mode

A method, performed by a user equipment (UE), of performing communication, according to an embodiment of the present disclosure, may include receiving configuration information about channel measurement for supporting an additional cell, performing, based on the configuration information about the channel measurement, channel measurement on at least one additional cell configured for the UE, receiving a medium access control (MAC) control element (CE) indicating beam switching by the UE, based on a report on the channel measurement, and performing transmission or reception of data by using a beam switched based on the received MAC CE.

A method, performed by a base station, of performing communication, according to an embodiment of the present disclosure, may include transmitting, to a UE, configuration information about channel measurement for supporting an additional cell, receiving a report on channel measurement that is performed on at least one additional cell configured for the UE based on the configuration information about the channel measurement, transmitting a MAC CE indicating beam switching by the UE, based on the report on the channel measurement, and performing transmission or reception of data by using a beam switched, based on the MAC CE.

A UE according to an embodiment of the present disclosure may include a transceiver, and a processor connected to the transceiver and configured to receive configuration information about channel measurement for supporting an additional cell, perform, based on the configuration information about the channel measurement, channel measurement on at least one additional cell configured for the UE, receive a MAC CE indicating beam switching by the UE, based on a report on the channel measurement, and perform transmission or reception of data by using a beam switched based on the received MAC CE.

A base station according to an embodiment of the present disclosure may include a transceiver, and a processor connected to the transceiver and configured to transmit, to a UE, configuration information about channel measurement for supporting an additional cell, receive a report on channel measurement that is performed on at least one additional cell configured for the UE based on the configuration information about the channel measurement, transmit a MAC CE indicating beam switching by the UE, based on the report on the channel measurement, and perform transmission or reception of data by using a beam switched based on the MAC CE.

Mode for Invention

Hereinafter, operation principles of the present disclosure will be described in detail with reference to the accompanying drawings. In the following description of the present disclosure, when it is determined that detailed descriptions of related known functions or configurations may unnecessarily obscure the subject matter of the present disclosure, the descriptions thereof will be omitted. Furthermore, the terms to be described later are defined by taking functions described in the present disclosure into account and may be changed according to a user's or operator's intent or customs. Therefore, definition of the terms should be made based on the overall descriptions in the present specification.

For the same reason, in the accompanying drawings, some components are exaggerated, omitted, or schematically illustrated. Furthermore, the size of each element does not entirely reflect an actual size thereof. In the drawings, like reference numerals refer to the same or corresponding elements throughout.

Advantages and features of the present disclosure and methods of accomplishing the same will be more readily appreciated by referring to the following description of embodiments and the accompanying drawings. However, the present disclosure may be embodied in many different forms and should not be construed as being limited to the disclosed embodiments set forth below; rather, the embodiments are provided so that the present disclosure will be thorough and complete and will fully convey the scope of the disclosure to those of ordinary skill in the art, and the present disclosure will only be defined by the appended claims.

It will be understood that each block of a flowchart in the drawings and combinations of blocks of the flowchart may be performed by computer program instructions. These computer program instructions may be loaded into a processor of a general-purpose computer, a special-purpose computer, or other programmable data processing equipment, and thus, the instructions performed via the processor of the computer or other programmable data processing equipment generate a means for performing functions specified in the flowchart block(s). The computer program instructions may also be stored in a computer-executable or computer-readable memory capable of directing a computer or other programmable data processing equipment to implement functions in a specific manner, and thus, the instructions stored in the computer-executable or computer-readable memory may produce an article of manufacture including instruction means for performing the functions described in the flowchart block(s). The computer program instructions may also be loaded into a computer or other programmable data processing equipment, and thus, instructions for operating the computer or the other programmable data processing equipment by generating a computer-executed process when a series of operations are performed in the computer or the other programmable data processing equipment may provide operations for performing the functions described in the flowchart block(s).

Furthermore, each block may represent a portion of a module, segment, or code that includes one or more executable instructions for executing specified logical function(s). It should also be noted that, in some alternative implementations, functions mentioned in blocks may occur out of order. For example, two blocks illustrated in succession may be executed substantially simultaneously, or the blocks may sometimes be executed in reverse order depending on functions corresponding thereto.

As used herein, the term 'unit' denotes a software element or a hardware element such as a field-programmable gate array (FPGA) or an application-specific integrated circuit (ASIC), and performs certain functions. However, the term 'unit' is not limited to software or hardware. The 'unit' may be configured to be in an addressable storage medium or configured to operate one or more processors. Thus, the term 'unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables. Functions provided by the elements and 'units' may be combined into a smaller number of elements and 'units', or may be further divided into additional elements and 'units'. Furthermore, the elements and 'units' may be embodied to reproduce one or more central processing units (CPUs) in a device or security multimedia card. In addition, in an embodiment, the 'unit' may include one or more processors.

In the following description of the present disclosure, when it is determined that detailed descriptions of related known functions or configurations may unnecessarily obscure the subject matter of the present disclosure, the descriptions thereof will be omitted. Hereinafter, embodiments of the present disclosure will be described in detail with reference to the accompanying drawings.

As used in the following description, terms identifying access nodes, terms indicating network entities, terms indicating messages, terms indicating interfaces between network entities, terms indicating various types of identification information, etc. are exemplified for convenience of description. Accordingly, the present disclosure is not limited to terms to be described later, and other terms representing objects having the equivalent technical meaning may be used.

Hereinafter, for convenience of descriptions, the present disclosure uses terms and names defined in the 3rd Generation Partnership Project Long-Term Evolution (3GPP LTE) specifications. However, the present disclosure is not limited to the terms and names but may also be identically applied to systems that comply with other standards. For example, in the present disclosure, an evolved Node B (eNB) may be used interchangeably with a next-generation Node B (gNB) for convenience of description. In other words, a base station described as an eNB may represent a gNB.

Hereinafter, a base station is an entity that allocates resources to a UE, and may be at least one of a gNB, an eNB, a Node B, a BS, a radio access unit, a base station controller, or a network node. A terminal may include a user equipment (UE), a mobile station (MS), a cellular phone, a smart phone, a computer, or a multimedia system capable of performing a communication function. However, the base station and the terminal are not limited to the above examples.

Furthermore, although embodiments of the present disclosure are hereinafter described with respect to a long-term evolution (LTE), LTE-Advanced (LTE-A), LTE Pro, or 5th-generation (5G) (or new radio (NR) or next-generation mobile communication) system, the embodiments of the present disclosure may be applied to other communication systems having similar technical backgrounds and channel configurations. It will also be understood by those skilled in the art that embodiments of the present disclosure are applicable to other communication systems through some modification within a range that does not greatly depart from the scope of the present disclosure.

In the following description of the present disclosure, when it is determined that detailed descriptions of related known functions or configurations may unnecessarily obscure the subject matter of the present disclosure, the descriptions thereof will be omitted. Hereinafter, embodiments of the present disclosure will be described in detail with reference to the accompanying drawings.

The present disclosure is intended to address inefficiency due to a long delay caused by following an existing procedure when a UE is currently receiving a service via a specific beam from a current serving cell and wants to switch to a beam belonging to another cell. In addition, due to L1 and L2 based beam switching and handover operations proposed in the present disclosure, the UE is able to support beam switching, or beam switching and handover to a cell other than a serving cell, and transmit and receive data after switching to a beam of another cell with a low delay compared to when using the existing procedure.

FIG. 1A illustrates a structure of an LTE system according to an embodiment of the present disclosure.

Referring to FIG. 1A, a radio access network for the LTE system may consist of next-generation base stations (hereinafter referred to as eNBs, Node Bs, or base stations) 1a-05, 1a-10, 1a-15, and 1a-20, a mobility management entity (MME) 1a-25, and a serving-gateway (S-GW) 1a-30. However, the radio access network is not limited to the above example but may include many more entities. A UE (hereinafter, referred to as a 'UE' or terminal) 1a-35 may connect to an external network via the eNBs 1a-05, 1a-10, 1a-15, and 1a-20 and the S-GW 1a-30.

In FIG. 1A, the eNBs 1a-05, 1a-10, 1a-15, and 1a-20 correspond to existing node Bs in a universal mobile telecommunication system (UMTS). The eNBs are each connected to the UE 1a-35 via radio channels and perform more complicated functions than the existing Node B. In the LTE system, all user traffic including real-time services like voice over Internet protocol (VoIP) services may be served on shared channels, and thus, an entity may be required to perform scheduling by collecting status information such as buffer states, available transmit power states, and channel states for UEs, and each of the eNBs 1a-05, 1a-10, 1a-15, and 1a-20 may be responsible for this function. One eNB may generally control multiple cells. For example, to achieve a data rate of 100 megabits per second (Mbps), the LTE system may utilize orthogonal frequency division multiplexing (OFDM) as a radio access scheme, e.g., in a 20 megahertz (MHz) bandwidth. However, radio access schemes that can be used by the LTE system is not limited to the above example.

Furthermore, the eNBs 1a-05, 1a-10, 1a-15, and 1a-20 may apply adaptive modulation & coding (AMC) that determines a modulation scheme and a channel coding rate according to channel states of UEs. The S-GW 1a-30 is an entity for providing a data bearer and may create or delete the data bearer according to control by the MME 1a-25. The MME 1a-25 is responsible for performing various control functions as well as mobility management for the UE and may be connected to the plurality of base stations.

FIG. 1B illustrates a radio protocol architecture for an LTE system, according to an embodiment of the present disclosure.

Referring to FIG. 1B, a radio protocol stack for each of a UE and an eNB in the LTE system consists of packet data convergence protocol (PDCP) 1b-05 or 1b-40, radio link control (RLC) 1b-1 0 or 1b-35, and medium access control (MAC) 1b-15 or 1b-30. The PDCP 1b-05 or 1b-40 is responsible for operations such as Internet Protocol (IP) header compression/decompression. Main functions of the PDCP are summarized as follows. However, the functions of the PDCP 1b-05 or 1b-40 are not limited to the following example.

- Header compression and decompression: robust header compression (ROHC) only
- Transfer of user data
- In-sequence delivery of upper layer packet data units (PDUs) at PDCP re-establishment procedure for RLC acknowledged mode (AM)
- Reordering (for split bearers in dual connectivity (DC) (only support for RLC AM): PDCP PDU routing for transmission and PDCP PDU reordering for reception)
- Duplicate detection of lower layer service data units (SDUs) at PDCP re-establishment procedure for RLC AM
- Retransmission of PDCP SDUs at handover, and, for split bearers in DC, of PDCP PDUs at PDCP data-recovery procedure, for RLC AM
- Ciphering and deciphering
- Timer-based SDU discard in uplink (UL)

The RLC 1b-10 or 1b-35 reconfigures PDCP PDUs in an appropriate size to perform an automatic repeat request (ARQ) operation, etc. Main functions of the RLC are summarized as follows. However, the functions of the RLC are not limited to the following example.

- Data transfer (Transfer of upper layer PDUs)
- ARQ (Error correction through ARQ (only for AM data transfer))
- Concatenation, segmentation and reassembly of RLC SDUs (only for unacknowledged mode (UM) and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 1b-15 or 1b-30 is connected with multiple RLC layers configured in the UE and performs multiplexing of RLC PDUs into MAC PDUs and demultiplexing of RLC PDUs from MAC PDUs. Main functions of the MAC may be summarized as follows. However, the functions of the MAC are not limited to the following example.

- Mapping between logical channels and transport channels
- Multiplexing/demultiplexing of MAC SDUs belonging to one or different logical channels into/from transport blocks (TBs) delivered to/from the physical layer on transport channels
- Scheduling information reporting
- Hybrid ARQ (HARQ) (Error correction through HARQ)
- Priority handling between logical channels of one UE
- Priority handling between UEs by means of dynamic scheduling
- Multimedia broadcast/multicast service (MBMS) service identification
- Transport format selection

- Padding

A physical layer (hereinafter, also referred to as a PHY layer) 1b-20 or 1b-25 performs channel coding and modulation on upper-layer data to generate OFDM symbols and transmits the OFDM symbols via a radio channel, or performs demodulation and channel decoding on OFDM symbols received via a radio channel and transfer the demodulated and channel-decoded OFDM symbols to an upper layer. Furthermore, HARQ is used for additional error correction at the PHY layer, and a receiving end transmits 1 bit of information indicating whether packets transmitted from a transmitting end are received. The information is referred to as HARQ acknowledgement (ACK)/negative acknowledgement (NACK) information. Downlink (DL) HARQ ACK/NACK information for UL data transmission may be transmitted through a physical HARQ indicator channel (PHICH), and UL HARQ ACK/NACK information for DL data transmission may be transmitted through a physical UL control channel (PUCCH) or a physical UL shared channel (PUSCH).

Moreover, the PHY layer may consist of one or a plurality of frequencies/carriers, and a technology for simultaneously configuring and using a plurality of frequencies is referred to as a carrier aggregation (hereinafter abbreviated as CA) technology. A CA technology may significantly increase a transmission capacity by the number of secondary carriers by using a primary carrier and one or a plurality of secondary carriers instead of only one carrier for communication between a UE and a base station (evolved UMTS terrestrial radio access network (E-UTRAN) NodeB or an eNB). Moreover, in LTE, a cell in a base station using a primary carrier is termed a primary cell (PCell), and a cell using a secondary carrier is termed a secondary cell (SCell).

Although not shown in FIG. 1B, a radio resource control (RRC) layer may exist as an upper layer of the PDCP layer at each of the UE and the base station, and the RRC layer may exchange connection and measurement configuration control messages for controlling radio resources.

FIG. 1C illustrates a structure of a next-generation mobile communication system according to an embodiment of the present disclosure.

Referring to FIG. 1C, a radio access network for the next-generation mobile communication system may consist of a next-generation base station (or an NR node B (hereinafter, referred to as NR NB, NR gNB, gNB, or NR base station)) 1c-10, and an NR core network (NR CN) (or next-generation core network (NG CN)) 1c-05. However, the radio access network for the next-generation mobile communication system is not limited to the above example, and may include more entities. A UE (hereinafter referred to as an NR UE or terminal) 1c-15 may connect to an external network via the NR NB 1c-10 and the NR CN 1c-05.

In FIG. 3, the NR NB 1c-10 corresponds to an eNB in the legacy LTE system. The NR NB may be connected to the NR UE 1c-15 via a radio channel and provide a higher level of service than the legacy node B. In the next-generation mobile communication system, because all user traffic may be served on shared channels, an entity may be required to perform scheduling by collecting status information such as buffer states, available transmit power states, and channel states for UEs, and the NR NB 1c-10 may be responsible for this function. One NR NB may generally control multiple cells.

According to an embodiment of the present disclosure, the next-generation mobile communication system may have bandwidths greater than the existing maximum bandwidth to achieve ultra-high-speed data transfer as compared to LTE, and additionally apply a beamforming technique using OFDM as a radio access scheme. Furthermore, an AMC scheme may be applied to determine a modulation scheme and a channel coding rate according to a channel state of a UE.

The NR CN 1c-05 may perform functions such as mobility support, bearer configuration, quality of service (QoS) configuration, etc. The NR CN 1c-05 is an entity responsible for performing various control functions as well as mobility management for a UE and may be connected to a plurality of base stations. Furthermore, the next-generation mobile communication system may interwork with the legacy LTE system, and the NR CN may be connected with an MME 1c-25 via a network interface. The MME may be connected to an eNB 1c-30 that is the legacy base station.

FIG. 1D illustrates a radio protocol architecture for a next-generation mobile communication system, according to an embodiment of the present disclosure.

Referring to FIG. 1D, a radio protocol stack for each of a UE and an NR base station in the next-generation mobile communication system includes NR service data adaptation protocol (NR SDAP) 1d-01 or 1d-45, NR PDCP 1d-05 or 1d-40, NR RLC 1d-10 or 1d-35, and NR MAC 1d-15 or 1d-30.

Main functions of the NR SDAP 1d-01 or 1d-45 may include some of the following functions. However, the functions of the NR SDAP 1d-01 or 1d-45 are not limited to the following example.

- Transfer of user plane data
- Mapping between a QoS flow and a data radio bearer (DRB) for both DL and UL
- Marking a QoS flow identifier (ID) in both DL and UL packets
- Reflective QoS flow to DRB mapping for the UL SDAP PDUs

For a SDAP layer, the UE may receive, via an RRC message, a configuration as to whether to use a header of the SDAP layer or a function of the SDAP layer per PDCP layer, per bearer, or per logical channel, and when an SDAP header is configured, a 1-bit non-access stratum (NAS) reflective QoS indicator and a 1-bit AS reflective QoS indicator in the SDAP header may instruct the UE to update or reconfigure information about mapping between a QoS flow to a DRB for both UL and DL. Furthermore, according to an embodiment of the present disclosure, the SDAP header may include QoS flow ID information identifying QoS. The QoS information may be used as a priority for data processing, scheduling information, etc. to support a smooth service.

Main functions of the NR PDCP 1d-05 or 1d-40 may include some of the following functions. However, the functions of the NR PDCP 1d-05 or 1d-40 are not limited to the following example.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in UL

In the above description, the reordering function of the NR PDCP 1d-05 or 1d-40 may refer to a function of sequentially reordering PDCP PDUs received from a lower layer based on a PDCP sequence number (SN). The reordering function of the NR PDCP 1d-05 or 1d-40 may include a function of transmitting data to an upper layer in an order the data is reordered, a function of directly transmitting data to an upper layer without taking the order into account, a function of reordering PDCP PDUs and recording missing PDCP PDUs, a function of submitting a status report on the missing PDCP PDUs to a transmitting side, and a function of requesting retransmission of the missing PDCP PDUs.

Main functions of the NR RLC 1d-10 or 1d-35 may include some of the following functions. However, the functions of the NR RLC 1d-10 or 1d-35 are not limited to the following example.

- Data transfer (Transfer of upper layer PDUs)
- In-sequence delivery of upper layer PDUs
- Out-of-sequence delivery of upper layer PDUs
- ARQ (Error correction through ARQ)
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, the in-sequence delivery function of the NR RLC 1d-10 or 1d-35 may refer to a function of sequentially transmitting RLC SDUs received from a lower layer to an upper layer. The in-sequence delivery function of the NR RLC entity may include a function of, when one RLC SDU is segmented into multiple RLC SDUs and received, reassembling and transmitting the multiple RLC SDUs. Furthermore, the in-sequence delivery function of the NR RLC 1d-10 or 1d-35 may include a function of reordering received RLC PDUs based on an RLC SN or a PDCP SN, a function of reordering RLC PDUs and recording missing RLC PDUs, a function of submitting a status report on the missing RLC PDUs to a transmitting side, and a function of requesting retransmission of the missing RLC PDUs.

The in-sequence delivery function of the NR RLC 1d-10 or 1d-35 may include a function of sequentially transferring, when there is a missing RLC SDU, only RLC SDUs preceding the missing RLC SDU to an upper layer, a function of sequentially transferring, to an upper layer, all RLC SDUs received before a given timer is restarted if the timer expires even though there is a missing RLC SDU, or a function of sequentially transferring, to the upper layer, all RLC SDUs received up to a current time point if the given timer expires even though there is a missing RLC SDU.

Furthermore, the in-sequence delivery function of the NR RLC 1d-10 or 1d-35 may include processing RLC PDUs in an order that the RLC PDUs are received regardless of the order of SNs and transmitting the RLC PDUs to the NR PDCP entity, or when receiving a segment, receiving segments stored in a buffer or to be subsequently received to reconstruct a complete RLC PDU and then transferring the RLC PDU to the NR PDCP entity. The NR RLC 1d-10 or 1d-35 (entity or layer) may not include a concatenation function, and the concatenation function may be performed at the NR MAC layer or be replaced with the multiplexing function of the NR MAC layer.

In the above description, the out-of-sequence delivery function of the NR RLC entity may refer to a function of directly transmitting RLC SDUs received from a lower layer to an upper layer regardless of their orders. The out-of-sequence delivery function of the NR RLC 1d-10 or 1d-35 may include a function of, when one RLC SDU is segmented into multiple RLC SDUs and received, reassembling and transmitting the multiple RLC SDUs, and a function of storing RLC SNs or PDCP SNs of received RLC PDUs and ordering the RLC PDUs and recording missing RLC PDUs.

The NR MAC 1d-15 or 1d-30 may be connected to multiple NR RLC layers configured in one UE, and main functions of the NR MAC may include some of the following functions. However, the functions of the NR MAC 1d-15 or 1d-30 are not limited to the following example.

- - Mapping between logical channels and transport channels
- - Multiplexing/demultiplexing of MAC SDUs
- - Scheduling information reporting
- - HARQ (Error correction through HARQ)
- - Priority handling between logical channels of one UE
- - Priority handling between UEs by means of dynamic scheduling
- - MBMS service identification
- - Transport format selection
- - Padding

An NR PHY layer 1d-20 or 1d-25 may perform channel coding and modulation on upper layer data to generate OFDM symbols and transmit the OFDM symbols via a radio channel, or perform demodulation and channel decoding on OFDM symbols received via a radio channel and transfer the demodulated and channel-decoded OFDM symbols to an upper layer. However, the functions of the NR PHY layer 1d-20 or 1d-25 are not limited to the above example.

FIG. 1E is a diagram illustrating a scenario in which a UE transmits and receives data by using a beam from a transmission/reception point (TRP) of a cell that supports L1/L2 based beam switching, while the UE maintains a connection to a serving cell, according to a first embodiment of the present disclosure.

Moreover, it is obvious to a person of ordinary skill in the art that the first embodiment may be operated in combination with a second embodiment described below in part or in whole.

Although FIG. 1E shows a case where a plurality of cells TRP 1-Cell 1 1e-10 and TRP 2-Cell 2 1e-15 exist in one distributed unit (DU) 1e-05, embodiments of the present disclosure are also applicable in the case of inter-DU (where each DU constitutes one TRP-Cell). In addition, in the embodiments of the present disclosure, a non-serving cell (TRP 2-Cell 2) supporting L1/L2 based mobility (beam switching and serving cell change) is interchangeably referred to as a non-serving cell, an additional cell supporting L1/L2 centric mobility, or the like. However, the embodiments of the present disclosure are not limited to the above example.

According to an embodiment of the present disclosure, a legacy UE beam switching procedure 1e-45 is as follows.

When a UE 1e-20 is transmitting and receiving data in a connected state via a TRP 1 of a serving cell 1 and is configured with transmission configuration indictor (TCI) state 1 1e-25 that is an optimal beam, the UE 1e-20 may receive, from the serving cell 1e-10, via RRC configuration information, an indication about configuration information for Layer 3 (L3) channel measurement on the additional cell TRP 2-Cell 2 1e-15 supporting L1/L2 centric mobility, and perform an L3 measurement operation for predetermined frequency and cell based on the configuration information for the channel measurement. Subsequently, the serving cell (TRP 1-Cell 1 1e-10) may indicate a handover to the corresponding cell (TRP 2-Cell 2 1e-15) to the UE based on a reported measured value, and when the handover is completed, additional RRC configuration information may be transmitted to the UE 1e-20 via the TRP 2-Cell 2 1e-15. The RRC configuration information may include UL/DL configuration information, L1 measurement related configuration, etc. for the corresponding cell, and in particular, include TCI state configuration information for a physical DL control channel (PDCCH) and a physical DL shared channel (PDSCH). The UE 1e-20 may perform L1 measurement according to the RRC configuration information, and the additional cell (TRP 2-Cell 2 1e-15) supporting L1/L2 centric mobility may update the TCI state via L1/L2 signaling according to a measurement report. According to an embodiment of the present disclosure, a TCI state 2 1e-40 that is an optimal beam may be indicated through a TCI state update. Before the handover, the serving cell is Cell 1, and after the handover, Cell 2 may be the serving cell. That is, even after the handover, many procedures and time may be required until an optimal beam is indicated.

However, unlike the legacy UE beam switching procedure 1e-45, an enhanced beam switching technique 1e-50 according to an embodiment of the present disclosure is as follows.

The UE may receive, from the serving cell 1e-10, via the RRC configuration information, common configuration information and dedicated configuration information for the additional cell (TRP 2-Cell 2 1e-15) supporting L1/L2 centric mobility. That is, configuration information corresponding to ServingCellID, ServingCellConfigCommon, and ServingCellConfig may be provided. A method of providing configuration information for the TRP 2-Cell 2 may be one of the following two methods. Moreover, the method is not limited to the following example, and a combination of the two methods may also be possible.

1. First pre-configuration method

- Introduction of a new information element (IE) (tentatively referred to as additional SCell config (ASCellConfig) independent of SCell Config in the existing CellGroupConfig: introduced only for configuration for cells supporting L1/L2 centric mobility
- SCell index allocation method

    -- Alt 1:Splitting the existing SCell index range for implementation and using some indexes therein as SCell indexes. For example, within the entire SCell index range (from 1 to 31), X indexes are allocated and used only for SCell and Y indexes are allocated and used only for ASCell.
    -- Alt 2: Introduction of a dedicated ASCell index range in addition to the existing SCell index range. For example, ASCell indexes (from 32 to 35) are defined and introduced only for configuration for cells supporting L1/L2 centric mobility.

- Common configuration setting method: Reusing the structure of ServingCellConfigCommon but configuring only necessary parameters

    -- Physical channel index (PCI)
    -- Common configurations (UL/DL configuration, synchronization signal block (SSB), etc.)

- Dedicated configuration setting method:

    -- Bandwidth part (BWP) and dedicated channel configuration for UL/DL (random access channel (RACH), PDCCH/PDSCH/PUCCH/PUSCH, etc.)
    -- Channel state information (CSI)/SSB related L1 measurement and report configuration

2. Second pre-configuration method

- Including additional cell configuration (tentatively referred to as ASCellConfig IE) in sPCell/SCell Config in the existing CellGroupConfig: introduced only for configuration for cells supporting L1/L2 centric mobility, which can be referenced in sPCell/SCell.
- SCell index allocation method

    -- Alt 1:Splitting the existing SCell index range for implementation and using some indexes therein as SCell indexes. For example, within the entire SCell index range (from 1 to 31), X indexes are allocated and used only for SCell and Y indexes are allocated and used only for ASCell.
    -- Alt 2: Introduction of a dedicated ASCell index range in addition to the existing SCell index range. For example, ASCell indexes (from 32 to 35) are defined and introduced only for configuration for cells supporting L1/L2 centric mobility.

- Common configuration setting method: Reusing the structure of ServingCellConfigCommon but configuring only necessary parameters

    -- PCI (Physical channel index)
    -- Common configurations (UL/DL configuration, SSB, etc.)

- Dedicated configuration setting method:

    -- BWP and dedicated channel configuration for UL/DL (RACH, PDCCH/PDSCH/PUCCH/PUSCH, etc.)
    -- CSI/SSB related L1 measurement and report configuration

The high-level structure of the first pre-configuration method and the second pre-configuration method described above is shown below.

First pre-configuration method

Second pre-configuration method

In addition, a method of associating a TCI state corresponding to TRP2 may also be implemented by assigning an existing ServCellIndex to a part corresponding to a cell ID as shown in Table 1 below, or by associating and indicating a new cell ID (ASCell ID).

[Table 1]

```
TCI-State ::=              SEQUENCE {
   tci-StateId              ,
   qcl-Type1                QCL-Info,
   qcl-Type2                QCL-Info                    OPTIONAL,    --
Need R
   ...
}
QCL-Info ::=              SEQUENCE {
   cell              ServCellIndex          OPTIONAL,   -- Need R
   bwp-Id            BWP-Id          OPTIONAL, -- Cond CSI-RS-Indicated
   referenceSignal              CHOICE {
      csi-rs                  NZP-CSI-RS-ResourceId,
      ssb                     SSB-Index
   },
   qcl-Type                 ENUMERATED {typeA, typeB, typeC, typeD},
   ...
}
```

After receiving the configuration for the TRP 2-Cell 2 while connected to the serving cell 1, the UE may perform L1 measurement on the corresponding TRP 2-Cell 2 according to the configuration and report a measurement result to the serving cell (Cell 1 1e-10). When the serving cell determines, based on the measurement result, that switching to a specific beam (TCI state 2 1e-40) of the TRP 2 (Cell 2 1e-15) instead of using the serving cell beam (TCI state 1 1e-25) is required, the serving cell may trigger beam switching and indicate the beam switching to the UE via L1/L2 signaling. The UE switches the beam to the specific beam (TCI state 2 1e-40) of the TRP 2 (Cell 2 1e-15) according to the indication via L1/L2 signaling, and changes physical channel configuration and upper layer configuration based on preconfigured common/dedicated configuration information. Even after switching to the specific beam (TCI state 2 1e-40) of the TRP 2 (Cell 2 1e-15), the UE 1e-20 remains connected to the serving cell (Cell 1 1e-10), but perform data transmission and reception via a channel link of the TRP 2 (Cell 2 1e-15) (PDCCH/PDSCH reception and PUCCH/PUSCH transmission). The UE may then perform an independent L3 measurement operation, receive handover configuration from the serving cell (or serving cell base station) (Cell 1 1e-10), and perform a serving cell change to the TRP 2 (Cell 2 1e-15). Through the enhanced beam switching technique 1e-50 according to an embodiment of the present disclosure, the UE 1e-20 is able to perform data transmission and reception with the Cell 2 1e-15 (TRP 2) supporting L1/L2 based mobility while connected to the serving cell (Cell 1, TRP 1) and to use the corresponding beam continuously even after a handover.

FIG. 1F is a diagram illustrating a scenario in which a UE transmits and receives data by changing a beam and a serving cell to a TRP of a cell that supports L1/L2 based beam switching, according to a second embodiment of the present disclosure.

Moreover, it is obvious to a person of ordinary skill in the art that the second embodiment may be operated in combination with the first embodiment in part or in whole.

Although FIG. 1F shows a case where a plurality of cells TRP1-Cell1 1f-10 and TRP2-Cell2 1f-15 exist in one DU 1f-05, embodiments of the present disclosure are also applicable in the case of inter-DU (where each DU constitutes one TRP-Cell). In addition, in the embodiments of the present disclosure, a non-serving cell (TRP 2, Cell 2) supporting L1/L2 based mobility (beam switching and serving cell change) is interchangeably referred to as a non-serving cell, an additional cell supporting L1/L2 centric mobility, or the like.

According to an embodiment of the present disclosure, a legacy UE beam switching procedure 1f-45 is as follows.

When a UE 1f-20 is transmitting and receiving data in a connected state via a TRP 1 of a serving cell 1 and is configured with TCI state 1 1f-25 that is an optimal beam, the UE may receive, from the serving cell 1f-10, via RRC configuration information, an indication about configuration information for L3 channel measurement on the additional cell (TRP 2-Cell 2 1f-15) supporting L1/L2 centric mobility, and perform an L3 measurement operation for predetermined frequency and cell based on the configuration information for the channel measurement. Subsequently, the serving cell (TRP 1-Cell 1 1f-10) may indicate to the UE a handover to the corresponding cell (TRP 2-Cell 2 1f-15) based on a reported measured value, and when the handover is completed, additional RRC configuration information may be transmitted to the UE 1f-20 via the TRP 2-Cell 2 1f-15. The RRC configuration information may include UL/DL configuration information, L1 measurement related configuration, etc. for the corresponding cell, and in particular, include TCI state configuration information for a PDCCH and a PDSCH. The UE 1f-20 may perform L1 measurement according to the RRC configuration information, and the additional cell (TRP 2-Cell 2 1f-15) supporting L1/L2 centric mobility may update the TCI state via L1/L2 signaling according to a measurement report. According to an embodiment of the present disclosure, a TCI state 2 1f-40 that is an optimal beam may be indicated through a TCI state update. Before the handover, the serving cell is Cell 1, and after the handover, Cell 2 may be the serving cell. That is, even after the handover, many procedures and time may be required until the optimal beam is indicated.

However, unlike the legacy UE beam switching procedure 1f-45, an enhanced beam switching technique 1f-50 according to an embodiment of the present disclosure is as follows.

The UE may receive, from the serving cell 1f-10, via the RRC configuration information, common configuration information and dedicated configuration information for the additional cell (TRP 2-Cell 2 1f-15) supporting L1/L2 centric mobility. That is, configuration information corresponding to ServingCellID, ServingCellConfigCommon, and ServingCellConfig may be provided. A method of providing configuration information for the TRP 2-Cell 2 may be one of the following two methods. Moreover, the method is not limited to the following example, and a combination of the two methods may also be possible.

### 1. First pre-configuration method

- Introduction of a new IE (tentatively referred to as ASCellConfig) independent of SCell Config in the existing CellGroupConfig: introduced only for configuration for cells supporting L1/L2 centric mobility
- SCell index allocation method

  -- Alt 1:Splitting an existing SCell index range for implementation and using some indexes therein as SCell indexes. For example, within the entire SCell index range (from 1 to 31), X indexes are allocated and used only for SCell and Y indexes are allocated and used only for ASCell.
  -- Alt 2: Introduction of a dedicated ASCell index range in addition to the existing SCell index range. For example, ASCell indexes (from 32 to 35) are defined and introduced only for configuration for cells supporting L1/L2 centric mobility.

- Common configuration setting method: Reusing the structure of ServingCellConfigCommon but configuring only necessary parameters

  -- Physical channel index (PCI)
  -- Common configurations (UL/DL configuration, synchronization signal block (SSB), etc.)

- Dedicated configuration setting method:

  -- BWP and dedicated channel configuration for UL/DL (RACH, PDCCH/PDSCH/PUCCH/PUSCH, etc.)
  -- CSI/SSB related L1 measurement and report configuration

### 2. Second pre-configuration method

- Including additional cell configuration (tentatively referred to as ASCellConfig IE) in sPCell/SCell Config in the existing CellGroupConfig: Introduced only for configuration for cells supporting L1/L2 centric mobility that can be referenced in sPCell/SCell.
- SCell index allocation method

-- Alt 1: Splitting the existing SCell index range for implementation and using some indexes as SCell indexes. For example, within the entire SCell index range (from 1 to 31), X indexes are allocated and used only for SCell and Y indexes are allocated and used only for ASCell.

-- Alt 2: Introduction of a dedicated ASCell index range in addition to the existing SCell index range. For example, ASCell indexes (from 32 to 35) are defined and introduced only for configuration for cells supporting L1/L2 centric mobility.

- Common configuration setting method: Reusing the structure of ServingCellConfigCommon but configuring only necessary parameters

  -- Physical channel index (PCI)
  -- Common configurations (UL/DL configuration, SSB, etc.)

- Dedicated configuration setting method:

  -- BWP and dedicated channel configuration for UL/DL (RACH, PDCCH/PDSCH/PUCCH/PUSCH, etc.)
  -- CSI/SSB related L1 measurement and report configuration In particular, filtering related configuration for averaging may be added to this configuration to robustly evaluate the L1 measurement because this is a scenario where handover may be indicated through the corresponding channel measurement.

The high-level structure of the first pre-configuration method and the second pre-configuration method described above is shown below.

First pre-configuration method          Second pre-configuration method

In addition, a method of associating a TCI state corresponding to TRP2 may also be implemented by assigning an existing ServCellIndex to a part corresponding to a cell ID as shown in Table 2 below, or by associating and indicating a new cell ID (ASCell ID).

[Table 2]

| TCI-State ::= | SEQUENCE { |
| --- | --- |
| tci-StateId | TCI-StateId, |
| qcl-Type1 | QCL-Info, |

14

```
    qcl-Type2              QCL-Info                    OPTIONAL,  --
Need R

    ...

}
QCL-Info ::=            SEQUENCE {
    cell              ServCellIndex         OPTIONAL,  -- Need R
    bwp-Id            BWP-Id          OPTIONAL, -- Cond CSI-RS-Indicated
    referenceSignal            CHOICE {
        csi-rs            NZP-CSI-RS-ResourceId,
        ssb               SSB-Index
    },
    qcl-Type               ENUMERATED {typeA, typeB, typeC, typeD},

    ...

}
```

After receiving the configuration for the TRP 2-Cell 2 while connected to the serving cell 1, the UE may perform L1 measurement on the corresponding TRP 2-Cell 2 according to the configuration and report a measurement result to the serving cell (Cell 1 1f-10). When the serving cell determines, based on the measurement result, that switching to a specific beam (TCI state 2 1f-40) of the TRP 2 (Cell 2 1f-15) instead of using the serving cell beam (TCI state 1 1f-25) is required, the serving cell may trigger beam switching and handover and indicate the beam switching and handover to the UE via L1/L2 signaling. The UE may switch the beam to the specific beam (TCI state 2 1f-40) of the TRP 2 (Cell 2 1e-15) simultaneously while performing a handover to the TRP2 (Cell 2 1f-15) according to the indication via L1/L2 signaling, and change all configuration operations based on preconfigured common/dedicated configuration information. The UE 1f-20 may change the serving cell to the TRP 2 (Cell 2 1f-15) and perform data transmission and reception (PDCCH/PDSCH reception and PUCCH/PUSCH transmission). Through the enhanced beam change technique 1f-50 according to an embodiment of the present disclosure, the UE 1f-20 is able to perform quick handover and beam switching to the specific beam (TCI state 2 1f-40) of Cell 2 (TRP 2 1f-15) via L1/L2 based signaling to thereby perform data transmission and reception, and to use the corresponding beam continuously even after the handover.

FIG. 1G is a diagram illustrating an overall operation according to a first embodiment of the present disclosure.

A UE 1g-01 may receive system information from Cell 1 (TRP 1-Cell 1) (a serving cell) 1g-02 (1g-15) while camping on the Cell 1 (1g-10) and perform transition to a connected state (1g-20). The Cell 1 1g-02 may request a neighboring Cell 2 (TRP 2-Cell 2) 1g-03 supporting L1/L2 based mobility for configuration information required when the UE 1g-01 performs L1/L2 based beam switching and handover (1g-25), and the Cell 2 1g-03 transmits a response message to the request, including the relevant configuration information (1g-30). The procedures 1g-25 and 1g-30 may also be omitted if the Cell 1 1g-02 and the Cell 2 1g-03 exist in one DU (an intra-DU scenario) in terms of network implementation. In operation 1g-35, the Cell 1 (serving cell) 1g-02 may transmit, to the UE, common/dedicated configuration information applied after L1/L2 based mobility to the Cell 2 1g-03 is indicated. Configuration methods and details thereof are as described in detail with reference to FIG. 1E.

Then, the UE may perform L1 measurement associated with the Cell 2 (TRP 2-Cell 2) 1g-03 while maintaining a connection with the Cell 1 (serving cell) 1g-02 in operation 1g-40, and report a corresponding measurement result to the Cell 1 (serving cell) 1g-02 according to a preconfigured L1 measurement reporting configuration method (1g-45). The Cell 1 (serving cell) 1g-02 may determine whether the UE shall perform beam switching based on the received measurement result, and if the Cell 1 1g-02 determines that switching to a specific beam of the Cell 2 1g-03 instead of using a specific beam (e.g., TCI state 1) of the Cell 1 1g-02 is required, the Cell 1 1g-02 may indicate a TCI state change by the UE 1g-01 via L1/L2 signaling in operation 1g-50. The L1/L2 signaling may be MAC control element (CE) or DL control information (DCI), and include information indicating switching to the specific beam (e.g., TCI State 2) of the Cell 2. In operation 1g-55, the UE 1g-01 may perform a procedure for establishing a channel link to the Cell 2 1g-03, in which the UE 1g-01 may perform random access by applying the configuration information for the Cell 2 1g-03 preconfigured in operation 1g-35, and perform data transmission and reception via dedicated channels (PDCCH/PDSCH and PUCCH/PUSCH). Even in operation 1g-55, the UE 1g-01 maintains the connection with the Cell 1 1g-02, and in operation 1g-60, may perform radio resource management (RRM) procedures, i.e., L3 measurement and channel reporting operations, on neighboring cells. In operation 1g-60, if the serving cell determines that a handover to the Cell 2 is required through the L3 measurement reporting from the UE 1g-01, the Cell 1 1g-02 and the Cell 2 1g-03 may exchange a configuration request for the handover (1g-65) and a handover indication message (1g-70). Operations 1g-65 and 1g-70 may be skipped if configuration information for the handover has been shared in advance. This may be an intra-DU case in terms of network implementation or a case where related information has already been shared in operations 1g-25 and 1g-30. In operation 1g-75, the Cell 1 (serving cell) 1g-02 may indicate a serving cell change to the Cell 2 (TRP 2-Cell 2) 1g-03 by indicating a handover message to the UE. In operation 1g-75, when the UE 1g-01 is already performing beam switching to a beam of the Cell 2 (TRP 2 -Cell 2) 1g-03 and transmitting/receiving data to/from the Cell 2 1g-03, obtaining of random access related configuration information may be omitted, and a random access operation may be skipped. The handover message in operation 1g-75 may include an indicator indicating a handover operation, and also include an indicator indicating omission of a random access operation. In operation 1g-85, the UE 1g-01 may perform a handover operation which may be a legacy handover operation, a dual active protocol stack (DAPS) handover, or a conditional handover. In other words, the UE 1g-01 may change the serving cell according to the configured handover message and release configuration of the previous serving cell.

FIG. 1H is a diagram illustrating an overall operation according to a second embodiment of the present disclosure.

A UE 1h-01 may receive system information from Cell 1 (TRP 1-Cell 1) 1h-02 (1h-15) while camping on the Cell 1 (1h-10) and perform transition to a connected state (1h-20). The Cell 1 (TRP1-Cell 1) 1h-02 may request a neighboring Cell 2 (TRP 2-Cell 2) 1h-03 supporting L1/L2 based mobility for configuration information required when the UE 1h-01 performs L1/L2 based beam switching and handover (1h-25), and the Cell 2 1h-03 transmits a response message to the request, including the relevant configuration information (1h-30). The procedures 1h-25 and 1h-30 may also be omitted if the Cell 1 1h-02 and the Cell 2 1h-03 exist in one DU (an intra-DU scenario) in terms of network implementation. In operation 1h-35, the Cell 1 (serving cell) 1h-02 may transmit, to the UE, common/dedicated configuration information applied after L1/L2 based mobility (beam switching and handover) to the Cell 2 1h-03 is indicated. Configuration methods and details thereof are as described in detail with reference to FIG. 1F.

Then, the UE may perform L1 measurement associated with the Cell 2 (TRP 2-Cell 2) 1h-03 while maintaining a connection with the Cell 1 1h-02 in operation 1h-40, and report a corresponding measurement result to the Cell 1 1h-02 according to a preconfigured L1 measurement reporting configuration method (1h-45). The L1 measurement and reporting in operation 1h-45 may be similar to L3 measurement and reporting related to a handover operation. That is, applying filtering to measured values may be added. The Cell 1 1h-02 may determine whether the UE shall perform beam switching and handover based on the received measurement result, and if the Cell 1 1h-02 determines that switching to a specific beam (e.g., TCI state 2) of the Cell 2 1h-03 instead of using a specific beam (e.g., TCI state 1) of the Cell 1 1h-02 is required, the Cell 1 1h-02 and the Cell 2 1h-03 may perform a handover negotiation procedure through a handover request (1h-50) and a configuration message reception procedure (1h-55) with a target cell, and then in operation 1h-60, the Cell 1 1h-02 may indicate a TCI state change by the UE 1h-01 via L1/L2 signaling. According to an embodiment, operations 1h-50 and 1h-55 may be omitted in an intra-DU case in terms of network implementation or in a case where related information has already been shared in operations 1h-25 and 1h-30. The L1/L2 signaling in operation 1h-60 may be MAC CE or DCI, and include information indicating switching to the specific beam of the Cell 2 1h-03. The UE 1h-01 may simultaneously perform a cell handover when receiving the L1/L2 signaling. According to an embodiment of the present disclosure, an operation may be defined so that handover and beam switching are always performed simultaneously, or if handover is additionally performed, an indicator may be included in the corresponding L1/L2 signaling.

In operation 1h-65, the UE 1h-01 may perform a handover to the Cell 2 1h-03 and a beam switching procedure. Unlike in FIG. 1G, the UE 1h-01 may perform a procedure for establishing a channel link to the target cell, in which the UE 1h-01 may perform random access by applying the configuration information for the Cell 2 1h-03 preconfigured in operation 1h-35, and perform data transmission and reception via dedicated channels (PDCCH/PDSCH and PUCCH/PUSCH). In other words, in operation 1h-65, the UE may perform the handover operation to change the serving cell and release configuration of the previous serving cell.

FIG. 1I illustrates an operation of a UE applied to a first embodiment of the present disclosure, i.e., all operations in which the UE performs L1/L2 based beam switching.

In operation 1i-05, the UE in a connected state may receive an RRC reconfiguration message from a serving cell. The UE may receive common/dedicated configuration information for a non-serving cell, which is applied after L1/L2 based mobility is indicated, via the RRC reconfiguration message. Because this corresponds to the description with reference to FIG. 1E, a detailed description thereof will be omitted. Thereafter, in operation 1i-10, the UE may perform L1 measurement associated with the non-serving cell while maintaining a connection with the serving cell, and report a measurement result to the serving cell according to a preconfigured L1 measurement reporting configuration method. The serving cell may determine whether the UE shall perform beam switching based on the received measurement result, and if the serving cell determines that switching to a specific beam of the non-serving cell instead of using a specific beam of the serving cell is required, it may indicate a TCI state change by the UE via L1/L2 signaling in operation 1i-15. The L1/L2 signaling may be MAC CE or DCI, and include information indicating switching to the specific beam of the non-serving cell. The following types of signaling may be applied.

1. First L1/L2 signaling: New MAC CE (assigned new logical channel identity (LCID)) introduced.

- Including index information + BWP information + TCI state index information for a non-serving cell

2. Second L1/L2 signaling: Adding related bits to DCI

- Including index information + BWP information + TCI state index information for a non-serving cell

3. Third L1/L2 signaling: Indication via RRC + DCI

- Preconfiguring index information + BWP information, etc. for a non-serving cell via RRC
- Indicating, via DCI, only an index indicating a combination preconfigured via RRC and a TCI state index

In operation 1i-20, the UE may maintain a connection with the current serving cell and perform a procedure for establishing a channel link to the non-serving cell. That is, the UE may perform random access by applying preconfigured configuration information for the non-serving cell, and perform data transmission and reception via dedicated channels (PDCCH/PDSCH and PUCCH/PUSCH). In operation 1i-25, the UE may perform RRM procedures, i.e., L3 measurement and channel reporting operations, on neighboring cells. If the serving cell determines that a handover to the non-serving cell is required through the L3 measurement reporting from the UE, the serving cell may indicate a serving cell change by indicating a handover message to the UE. When the UE receiving a handover command in operation 1i-30 is already performing beam switching to a beam of the non-serving cell and transmitting and receiving data to and from the corresponding cell, random access related operations may be skipped. The UE may change the serving cell according to handover indication and release configuration of the previous serving cell.

FIG. 1J illustrates an operation of a UE applied to a second embodiment of the present disclosure, i.e., all operations in which the UE performs L1/L2 based beam switching and handover.

In operation 1j-05, the UE in a connected state may receive an RRC reconfiguration message from a serving cell. The UE may receive common/dedicated configuration information for a non-serving cell, which is applied after L1/L2 based mobility is indicated, via the RRC reconfiguration message. Because this corresponds to the description with reference to FIG. 1F, a detailed description thereof will be omitted. Thereafter, in operation 1j-10, the UE may perform L1 measurement associated with the non-serving cell while maintaining a connection with the serving cell, and report a measurement result to the serving cell according to a preconfigured L1 measurement reporting configuration method. In particular, detailed operations related to the method of configuring the L1 measurement and reporting in this operation are described in detail with reference to FIG. 1K.

The serving cell may determine whether the UE shall perform beam switching and handover based on the received measurement result, and if the serving cell determines that switching to a specific beam of the non-serving cell instead of using a specific beam of the serving cell is required, the serving cell may indicate a TCI state change by the UE via L1/L2 signaling in operation 1j-15. This operation is different from the corresponding operation in FIG. 1I in that the L1/L2 signaling may also trigger a handover. The L1/L2 signaling may be MAC CE or DCI, and include information indicating switching to the specific beam of the non-serving cell and a serving cell change. The following signaling methods may be applied.

1. First L1/L2 signaling: New MAC CE (assigned new LCID) introduced.

- Including non-serving cell index information + BWP information + TCI state index information

2. Second L1/L2 signaling: New MAC CE (assigned new LCID) introduced.

- Including index information + BWP information + TCI state index + handover indicator for a non-serving cell

3. Third L1/L2 signaling: Adding related bits to DCI

- Including index information + BWP information + TCI state index information for a non-serving cell

4. Fourth L1/L2 signaling: Adding related bits to DCI

- Including index information + BWP information + TCI state index + handover indicator for a non-serving cell

5. Fifth L1/L2 signaling: Indication via RRC + DCI

- Preconfiguring index information + BWP information, etc. for a non-serving cell via RRC
- Indicating, via DCI, only an index indicating a combination preconfigured via RRC and a TCI state index + handover indicator

In operation 1j-20, the UE may check whether a handover indicator indicating a handover to the non-serving cell is present in the L1/L2 signaling received in operation 1j-15, and may perform different operations based on a result of checking for the presence. If a handover to a corresponding cell is configured to be always performed when the L1/L2 signaling is received or if a standard operation is determined, an operation of checking for a separate handover indicator may be omitted. For reference, the operation is always performed in the second embodiment.

According to an embodiment of the present disclosure, the serving cell may or may not provide an indication of a handover. If the handover indicator is included in operation 1j-20, the UE may switch to an indicated beam while performing a handover to a cell associated with an indicated TCI state in operation 1j-25. If the handover indicator is not included in operation 1j-20, the UE maintains the connection with the current serving cell and performs data transmission and reception via a switched beam after beam switching to an indicated TCI state for a cell in operation 1j-30. That is, the UE may perform random access by applying preconfigured configuration information for the non-serving cell, and perform data transmission and reception via dedicated channels (PDCCH/ PDSCH and PUCCH/ PUSCH). In operation 1j-35, the UE may perform RRM procedures, i.e., L3 measurement and channel reporting operations, on neighboring cells. In this operation, if it is determined that a handover to the non-serving cell is required through the L3 measurement reporting from the UE, the serving cell may indicate a serving cell change by indicating a handover message to the UE. When the UE receiving a handover command in operation 1j-40 is already performing beam switching to a beam of the non-serving cell and transmitting and receiving data to and from the corresponding cell, random access related operations may be skipped. The UE changes the serving cell according to handover indication and releases configuration of the previous serving cell.

FIG. 1K illustrates a method, performed by a UE, of performing channel measurement and reporting, which is applied to embodiments of the present disclosure.

In operation 1k-05, the UE in a connected state may receive an RRC reconfiguration message from a serving cell. The UE may receive common/dedicated configuration information for a non-serving cell, which is applied after L1/L2 based mobility is indicated, via the RRC reconfiguration message. Because this corresponds to the descriptions with reference to FIGS. 1E and 1F, a detailed description thereof will be omitted. Thereafter, in operation 1k-10, the UE performs L1 measurement associated with the non-serving cell while maintaining a connection with the serving cell. In particular, a method of configuring the L1 measurement and reporting in this operation may be different for each embodiment.

1. L1 measurement/report configuration of Embodiment 1

- Configure L1 measurement (linked with SSB/CSI reference signal (CSI-RS)) that should be made on a non-serving cell
- L1 measurement reporting method (measurement reporting via PUCCH/PUSCH): reporting can be performed in a periodic, aperiodic, or semi-periodic manner.

2. L1 measurement/report configuration of Embodiment 2 (apply filtering to L1 measurement so that a handover can be determined, i.e., configure an operation similar to the existing L3 measurement reporting method)

- Option 1: Implement the network to apply filtering to a L1 measurement value received from the UE

-- Configure L1 measurement (linked with SSB/CSI-RS) that should be made on a non-serving cell
-- L1 measurement reporting method (measurement reporting via PUCCH/ PUSCH): reporting can be performed in a periodic, aperiodic, or semi-periodic manner.

-- The base station determines a handover after applying filtering to the received measurement value, and transmits L1/L2 signaling.

- Option 2: Configure the UE to report a L1 measurement value after applying filtering thereto.

    -- Configure the UE to apply a weight and filtering to the L1 measurement value

$$F_n = (1-a) * F_{n-1} + a * M_n$$

where $F_n$ is a filtered measurement value, $F_{n-1}$ is a previously filtered measurement value, a is a weight for a current L1 measurement value and a previous L1 measurement value, and $M_n$ is a current L1 measurement value.

For reference, even if the above formula is not used, filtering may be applied for robustness enhancement of the L1 measurement value.

    -- Configure the UE to report when the filtered measurement value exceeds a certain threshold (optional)
    -- Always report measurement values unless a threshold is indicated.

The UE may perform different operations depending on whether filtering is required in operation 1k-15. According to an embodiment of the present disclosure, whether filtering is required may be indicated in RRC configuration, and the filtering operation may be statically configured as a standard operation. If filtering of a L1 measurement value is required, in operation 1k-20, the UE reports the L1 measurement value after applying a configured filtering algorithm. On the other hand, if filtering is not required in operation 1k-15, the UE reports, in operation 1k-25, a L1 measurement value to the serving cell according to the configured L1 measurement reporting method for the non-serving cell (measurement reporting via PUCCH/PUSCH, and reporting that can be performed in a periodic, aperiodic, or semi-periodic manner). The L1 measurement value may be an instantaneous measurement value to which filtering is not applied. Thereafter, in operation 1k-30, the UE may perform RRM procedures, i.e., L3 measurement and channel reporting operations, on neighboring cells. If the serving cell determines that a handover to the non-serving cell is required through the L3 measurement reporting from the UE in operation 1k-30, the serving cell (a base station of the serving cell) may indicate a serving cell change by indicating a handover message to the UE. When the UE receiving a handover command in operation 1k-35 is already performing beam switching to a beam of the non-serving cell and transmitting and receiving data to and from the corresponding cell, random access related operations may be skipped. The UE may change the serving cell according to handover indication and release configuration of the previous serving cell.

FIG. 1L illustrates operations of a base station, which are applied to embodiments of the present disclosure.

In operation 1I-05, the base station may provide system information to a UE, and in operation 1I-10, the base station may transmit, to the UE in a connected state, via an RRC reconfiguration message, common/dedicated configuration information for a non-serving cell, which is applied after L1/L2 based mobility is indicated. Because this operation corresponds to operations in FIGS. 1E and 1F, a detailed description thereof will be omitted. Subsequently, in operation 1I-15, the base station receives a L1 measurement value from the UE, and in this case, the measurement value may be a measurement result of a neighboring cell (a non-serving cell) supporting L1/L2 based mobility. The base station may determine whether the UE shall perform beam switching based on the received measurement result, and if the base station determines that switching to a specific beam of the non-serving cell instead of using a specific beam of the serving cell is required, the base station may indicate a TCI state change by the UE via L1/L2 signaling in operation 1I-20. The L1/L2 signaling may be MAC CE or DCI, and include information indicating switching to the specific beam of the non-serving cell. In addition, in operation 1I-20, the base station may simultaneously indicate a handover via the L1/L2 signaling. If the handover is indicated simultaneously, the serving cell (the base station of the serving cell) may perform a handover procedure, and when the handover to a target cell is completed, the base station may delete the UE context and release the connection with the UE.

If the L1/L2 signaling does not include a handover procedure, the base station maintains the connection with the UE in operation 1I-25. In operation 1I-25, the UE may perform random access by applying preconfigured configuration information for the non-serving cell, and perform data transmission and reception via dedicated channels (PDCCH/PDSCH and PUCCH/PUSCH). The UE may also return to the current serving cell from a link with the non-serving cell.

In operation 1I-25, the base station currently connected to the UE may receive an additional L3 measurement report, and if the serving cell (the base station of the serving cell) determines that a handover to the non-serving cell is required, the base station may indicate a serving cell change by indicating a handover message to the UE. In operation 1I-30, after the UE changes the serving cell according to handover indication, the base station may release configuration

**EP 4 322 612 A1**

of the previous serving cell.

FIG. 1M is a block diagram of an internal structure of a UE according to an embodiment of the present disclosure.

Referring to FIG. 1M, the UE may include a radio frequency (RF) processor 1m-10, a baseband processor 1m-20, a storage 1m-30, and a controller 1m-40. However, the UE is not limited to the above example, and may include fewer or more components that those shown in FIG. 1M.

According to an embodiment of the present disclosure, the RF processor 1m-10 may perform functions for transmitting and receiving signals via a radio channel, such as signal conversion between bands and amplification. That is, the RF processor 1m-10 may up-convert a baseband signal provided from the baseband processor 1m-20 into an RF signal and transmit the RF signal via an antenna, and down-convert an RF signal received via the antenna into a baseband signal. For example, the RF processor 1m-10 may include a transmit filter, a receive filter, an amplifier, a mixer, an oscillator, a digital-to-analog converter (DAC), an analog-to-digital converter (ADC), etc.

Although only one antenna is illustrated in FIG. 1M, the UE may include a plurality of antennas. The RF processor 1m-10 may also include a plurality of RF chains. Furthermore, the RF processor 1m-10 may perform beamforming. For beamforming, the RF processor 1m-10 may adjust a phase and a magnitude of each of the signals transmitted and received through the plurality of antennas or antenna elements. Also, the RF processor 1m-10 may perform multiple-input multiple-output (MIMO), and receive multiple layers when performing the MIMO operation.

The baseband processor 1m-20 may perform a function for conversion between a baseband signal and a bit string according to a physical layer standard of the system. For example, when transmitting data, the baseband processor 1m-20 may generate complex symbols by encoding and modulating a transmission bit string. Furthermore, when receiving data, the baseband processor 1m-20 may reconstruct a reception bit string by demodulating and decoding a baseband signal from the RF processor 1m-10. For example, according to an OFDM scheme, when transmitting data, the baseband processor 1m-20 may generate complex symbols by encoding and modulating a transmission bit string, map the complex symbols to subcarriers, and then produce OFDM symbols through inverse fast Fourier transform (IFFT) operations and cyclic prefix (CP) insertion. Furthermore, when receiving data, the baseband processor 1m-20 may divide the baseband signal from the RF processor 1m-10 into OFDM symbols, recover signals mapped to subcarriers through FFT operations, and then reconstruct a reception bit string through demodulation and decoding.

According to an embodiment of the present disclosure, the baseband processor 1m-20 and the RF processor 1m-10 may transmit and receive signals as described above. Accordingly, the baseband processor 1m-20 and the RF processor 1m-10 may be referred to as a transmitter, receiver, transceiver, or communication unit. Furthermore, at least one of the baseband processor 1m-20 and the RF processor 1m-10 may include a plurality of communication modules to support a plurality of different radio access technologies (RATs). In addition, at least one of the baseband processor 1m-20 and the RF processor 1m-10 may include different communication modules to process signals in different frequency bands. For example, the different RATs may include a wireless local area network (WLAN) technology (e.g., Institute of Electrical and Electronics Engineers (IEEE) 802.11), a cellular network technology (e.g., LTE), etc. Furthermore, the different frequency bands may include super-high frequency (SHF) bands (e.g., 2.NRHz, NRhz) and millimeter (mm)-wave bands (e.g., 60 GHz). The UE may transmit and receive a signal to and from a base station via the baseband processor 1m-20 and the RF processor 1m-10, and the signal may include control information and data.

The storage 1m-30 stores basic programs, application programs, and data such as configuration information for operations of the UE. In particular, the storage 1m-30 may store information related to an access node that performs wireless communication using a RAT. The storage 1m-30 may also provide stored data according to a request from the controller 1m-40. The storage 1m-30 may be composed of storage media, such as read-only memory (ROM), random access memory (RAM), hard discs, compact disc (CD)-ROM, and digital versatile discs (DVDs), or a combination thereof. Furthermore, the storage 1m-30 may include a plurality of memories. According to an embodiment, the storage 1m-30 may also store a program for performing the method of performing the L1/L2 based beam switching.

The controller 1m-40 controls all operations of the UE. For example, the controller 1m-40 may transmit and receive signals via the baseband processor 1m-20 and the RF processor 1m-10. The controller 1m-40 may also write and read data to and from the storage 1m-30. To achieve this, the controller 1m-40 may include at least one processor. For example, the controller 1m-40 may include a communication processor (CP) for performing control for communication and an application processor (AP) for controlling upper layers such as application programs. Furthermore, at least one component of the UE may be implemented as a single chip. In addition, according to an embodiment of the present disclosure, the controller 1m-40 may include a multi-connectivity processor 1m-42 that performs processing for operating in a multi-connectivity mode.

According to an embodiment of the present disclosure, the controller 1m-40 may control each component of the UE to perform the method of performing the L1/L2 based beam switching. That is, each component of the UE may operate to implement the above-described embodiments of the present disclosure.

FIG. 1N is a block diagram of a configuration of a base station according to an embodiment of the present disclosure.

A base station according to embodiments of the present disclosure may include one or more TRPs. As illustrated in FIG. 1N, the base station may include an RF processor 1n-10, a baseband processor 1n-20, a backhaul communication unit 1n-30, a storage 1n-40, and a controller 1n-50. The base station is not limited to the above example, and may include fewer or more components that those shown in FIG. 1N.

The RF processor 1n-10 may perform functions for transmitting and receiving signals via a radio channel, such as signal conversion between bands and amplification. That is, the RF processor 1n-10 may up-convert a baseband signal provided from the baseband processor 1n-20 into an RF signal and transmit the RF signal via an antenna, and down-convert an RF signal received via the antenna into a baseband signal. For example, the RF processor 1n-10 may include a transmit filter, a receive filter, an amplifier, a mixer, an oscillator, a DAC, an ADC, etc. Although only one antenna is illustrated in FIG. 1N, the base station may include a plurality of antennas. The RF processor 1n-10 may also include a plurality of RF chains. Furthermore, the RF processor 1n-10 may perform beamforming. For beamforming, the RF processor 1n-10 may adjust a phase and a magnitude of each of the signals transmitted and received through the plurality of antennas or antenna elements. Also, the RF processor 1n-10 may perform an MIMO DL operation by transmitting one or more layers.

The baseband processor 1n-20 may perform a function for conversion between a baseband signal and a bit string according to a physical layer standard of a RAT. For example, when transmitting data, the baseband processor 1n-20 generates complex symbols by encoding and modulating a transmission bit string. Furthermore, when receiving data, the baseband processor 1n-20 may reconstruct a reception bit string by demodulating and decoding a baseband signal from the RF processor 1n-10.

For example, according to an OFDM scheme, when transmitting data, the baseband processor 1n-20 generates complex symbols by encoding and modulating a transmission bit string, maps the complex symbols to subcarriers, and then produces OFDM symbols through IFFT operations and CP insertion. Furthermore, when receiving data, the baseband processor 1n-20 may divide the baseband signal from the RF processor 1n-10 into OFDM symbols, recover signals mapped to subcarriers through FFT operations, and then reconstruct a reception bit string through demodulation and decoding. The baseband processor 1n-20 and the RF processor 1n-10 transmit and receive signals as described above. Accordingly, the baseband processor 1n-20 and the RF processor 1n-10 may be referred to as a transmitter, receiver, transceiver, or communication unit. The base station may transmit and receive a signal to and from a UE via the baseband processor 1n-20 and the RF processor 1n-10, and the signal may include control information and data.

The backhaul communication unit 1n-30 may provide an interface to communicate with other nodes in a network. That is, the backhaul communication unit 1n-30 may convert a bit string to be transmitted from the base station to another node, such as an auxiliary base station, a CN, or the like, into a physical signal, and may convert a physical signal received from the other node into a bit string. The backhaul communication unit 1n-30 may be a communication unit.

The storage 1n-40 stores basic programs, application programs, and data such as configuration information for operations of the base station. In particular, the storage 1n-40 may store information about bearers allocated to a connected UE, measurement results reported by the connected UE, etc. Furthermore, the storage 1n-40 may store information that is a criterion for determining whether to provide or terminate multiple connectivity to or from the UE. The storage 1n-40 also provides stored data according to a request from the controller 1n-50. The storage 1n-40 may be composed of storage media, such as ROM, RAM, hard discs, CD-ROM, and DVDs, or a combination thereof. Furthermore, the storage 1n-40 may include a plurality of memories. According to an embodiment, the storage 1n-40 may also store a program for performing the method of performing the L1/L2 based beam switching.

The controller 1n-50 controls all operations of the base station. For example, the controller 1n-50 transmits and receives signals through the baseband processor 1n-20 and the RF processor 1n-10 or through the backhaul communication unit 1n-30. The controller 1n-50 also writes and reads data to and from the storage 1n-40. To achieve this, the controller 1n-50 may include at least one processor. Furthermore, at least one component of the base station may be implemented as a single chip. In addition, each component of the UE may operate to implement the above-described embodiments of the present disclosure.

The methods according to the embodiments described in the appended claims or specification of the present disclosure may be implemented in hardware, software, or a combination of hardware and software.

When the methods are implemented in software, a computer-readable storage medium having at least one program (software module) stored therein may be provided. The at least one program stored in the computer-readable storage medium is configured for execution by at least one processor within an electronic device. The at least one program includes instructions that cause the electronic device to execute the methods according to the embodiments described in the claims or specification of the present disclosure.

The program (software module or software) may be stored in RAM, non-volatile memory including a flash memory, ROM, electrically erasable programmable ROM (EEPROM), magnetic disc storage devices, CD-ROM, DVDs or other types of optical storage devices, and magnetic cassettes. Alternatively, the program may be stored in a memory that is configured as a combination of some or all of the stated devices. A plurality of such devices may be included in the memory

Furthermore, the program may be stored in an attachable storage device that may be accessed through communication networks, such as the Internet, Intranet, a LAN, a WLAN, and a storage area network (SAN), or a communication network configured in a combination thereof. The storage device may connect to a device for performing the methods according to the embodiments of the present disclosure via an external port. Furthermore, a separate storage device on a communication network may also connect to a device for performing the methods according to the embodiments of the present disclosure.

In the specific embodiments of the present disclosure, a component included in the present disclosure is expressed in a singular or plural form depending on the presented specific embodiments. However, singular or plural expressions are selected to be suitable for situations presented for convenience of description, and the present disclosure is not limited to elements in a singular or plural form, i.e., an element expressed in a plural form may be configured as a single element, or an element expressed in a singular form may be configured as a plurality of elements.

Moreover, although specific embodiments have been described in the detailed description of the present disclosure, various modifications may be made therein without departing from the scope of the present disclosure. Thus, the scope of the present disclosure should not be limited to the described embodiments but be defined by the following claims as well as their equivalents.

**Claims**

1. A method, performed by a user equipment (UE), of performing communication, the method comprising:

   receiving configuration information about channel measurement for supporting an additional cell;
   performing, based on the configuration information about the channel measurement, channel measurement on at least one additional cell configured for the UE;
   receiving a medium access control (MAC) control element (CE) indicating beam switching by the UE, based on a report on the channel measurement; and
   performing transmission or reception of data by using a beam switched based on the received MAC CE.

2. The method of claim 1, wherein the at least one additional cell is configured based on cell group configuration information received via higher layer signaling, and
   the MAC CE includes information about a transmission configuration indicator (TCI) state for the at least one additional cell.

3. The method of claim 1, wherein the configuration information about the channel measurement includes configuration information for layer 1 (L1) channel measurement or configuration information for layer 3 (L3) channel measurement.

4. The method of claim 1, further comprising receiving at least one of L1 signaling or layer 2 (L2) signaling indicating a handover, based on the report on the channel measurement.

5. A method, performed by a base station, of performing communication, the method comprising:

   transmitting, to a user equipment (UE), configuration information about channel measurement for supporting an additional cell;
   receiving a report on channel measurement that is performed on at least one additional cell configured for the UE based on the configuration information about the channel measurement;
   transmitting a medium access control (MAC) control element (CE) indicating beam switching by the UE, based on the report on the channel measurement; and
   performing transmission or reception of data by using a beam switched based on the MAC CE.

6. The method of claim 5, wherein the at least one additional cell is configured based on cell group configuration information received via higher layer signaling, and
   the MAC CE includes information about a transmission configuration indicator (TCI) state for the at least one additional cell.

7. The method of claim 5, wherein the configuration information about the channel measurement includes configuration information for layer 1 (L1) channel measurement or configuration information for layer 3 (L3) channel measurement.

8. A user equipment (UE) comprising:

a transceiver; and
a processor connected to the transceiver and configured to
receive configuration information about channel measurement for supporting an additional cell,
perform, based on the configuration information about the channel measurement, channel measurement on at least one additional cell configured for the UE,
receive a medium access control (MAC) control element (CE) indicating beam switching by the UE, based on a report on the channel measurement, and
perform transmission or reception of data by using a beam switched based on the received MAC CE.

9. The UE of claim 8, wherein the at least one additional cell is configured based on cell group configuration information received via higher layer signaling, and
the MAC CE includes information about a transmission configuration indicator (TCI) state for the at least one additional cell.

10. The UE of claim 8, wherein the configuration information about the channel measurement includes configuration information for layer 1 (L1) channel measurement or configuration information for layer 3 (L3) channel measurement.

11. The UE of claim 8, wherein the processor is further configured to receive at least one of L1 signaling or layer 2 (L2) signaling indicating a handover, based on the report on the channel measurement.

12. A base station comprising:

a transceiver; and
a processor connected to the transceiver and configured to
transmit, to a user equipment (UE), configuration information about channel measurement for supporting an additional cell,
receive a report on channel measurement that is performed on at least one additional cell configured for the UE based on the configuration information about the channel measurement,
transmit a medium access control (MAC) control element (CE) indicating beam switching by the UE, based on the report on the channel measurement, and
perform transmission or reception of data by using a beam switched based on the MAC CE.

13. The base station of claim 12, wherein the at least one additional cell is configured based on cell group configuration information received via higher layer signaling, and
the MAC CE includes information about a transmission configuration indicator (TCI) state for the at least one additional cell.

14. The base station of claim 12, wherein the configuration information about the channel measurement includes configuration information for layer 1 (L1) channel measurement or configuration information for layer 3 (L3) channel measurement.

15. The base station of claim 12, wherein the processor is further configured to transmit at least one of L1 signaling or layer 2 (L2) signaling indicating a handover, based on the report on the channel measurement.

# FIG. 1A

# FIG. 1B

# FIG. 1C

# FIG. 1D

# FIG. 1E

Scenario 1
(multi-TRP based approach)    1e-05

DU

1e-10

TRP 1, Cell 1

1e-15

TRP 2, Cell 2

1e-25    TCI state 1

1e-35    TCI state 2

1e-30    TCI state 1

1e-40    TCI state 2

1e-20    UE

1e-45

Legacy operation

| Measurement on Cell 2 | HO command | RRC Reconfiguration (TCI state config) | L1 measurement | TCI state update (TCI #2) |

1e-50

Target to achieve

| Pre-config (TRP2, Cell2) | Measurement on Cell 2 | TCI state update (TCI #2) | L3 measurement | HO command |

# FIG. 1F

Scenario 2
(L1-triggered Handover approach) 1f-05

DU

1f-10
TRP 1, Cell 1

1f-15
TRP 2, Cell 2

1f-25
TCI state 1

1f-35
TCI state 2

1f-30
TCI state 1

1f-40
TCI state 2

1f-20  UE

1f-45

Legacy operation

Measurement on Cell 2 — HO command — RRC Reconfiguration (TCI state config) — L1 measurement — TCI state update (TCI #2)

1f-50

Target to achieve

Pre-config (TRP2, Cell2) — Measurement on Cell 2 — HO+TCI state update (TCI #2)

# FIG. 1G

# FIG. 1H

# FIG. 1I

```
┌─────────────────┐
│  Connected UE   │
└─────────────────┘
         │
         ▼
┌─────────────────────────────────────┐
│ RECEIVE RRC RECONFIGURATION (NON-    │ ── 1i-05
│ SERVING CELL CONFIGURATION           │
│ INFORMATION)                         │
└─────────────────────────────────────┘
         │
         ▼
┌─────────────────────────────────────┐
│ PERFORM NON-SERVING CELL L1 CHANNEL  │ ── 1i-10
│ MEASUREMENT AND REPORTING            │
└─────────────────────────────────────┘
         │
         ▼
┌─────────────────────────────────────┐
│ INDICATE TCI UPDATE TO NON-SERVING   │ ── 1i-15
│ CELL (MAC CE OR DCI)                 │
└─────────────────────────────────────┘
         │
         ▼
┌─────────────────────────────────────┐
│ MAINTAIN CONNECTION WITH CURRENT     │ ── 1i-20
│ SERVING CELL AND TRANSMIT AND        │
│ RECEIVE DATA VIA CORRESPONDING BEAM  │
│ AFTER BEAM SWITCHING TO INDICATED    │
│ TCI STATE                            │
└─────────────────────────────────────┘
         │
         ▼
┌─────────────────────────────────────┐
│ PERFORM L3 MEASUREMENT AND REPORTING │ ── 1i-25
└─────────────────────────────────────┘
         │
         ▼
┌─────────────────────────────────────┐
│ RECEIVE HANDOVER COMMAND             │ ── 1i-30
└─────────────────────────────────────┘
```

# FIG. 1J

Connected UE

RECEIVE RRC RECONFIGURATION
(NON-SERVING CELL CONFIGURATION INFORMATION) — 1j-05

PERFORM NON-SERVING CELL CHANNEL
MEASUREMENT AND REPORTING — 1j-10

INDICATE TCI UPDATE TO NON-SERVING CELL
(MAC CE OR DCI) — 1j-15

1j-20
CHECK WHETHER
HANDOVER COMMAND
INDICATOR IS
INCLUDED

1j-25
PERFORM HO TO CELL
ASSOCIATED WITH INDICATED
TCI STATE
(PERFORM BEAM SWITCHING
AND HO SIMULTANEOUSLY)

1j-30 — MAINTAIN CONNECTION WITH
CURRENT SERVING CELL AND
TRANSMIT AND RECEIVE
DATA VIA CORRESPONDING
BEAM AFTER BEAM SWITCHING
TO INDICATED TCI STATE

1j-35 — PERFORM L3 MEASUREMENT
AND REPORTING

1j-40 — RECEIVE HANDOVER COMMAND

# FIG. 1K

Connected UE

RECEIVE RRC RECONFIGURATION
(NON-SERVING CELL CONFIGURATION INFORMATION) — 1k-05

PERFORM NON-SERVING CELL CHANNEL
MEASUREMENT AND REPORTING — 1k-10

1k-15

CHECK
WHETHER FILTERING
IS APPLIED

YES

NO

1k-20

REPORT L1 MEASUREMENT
RESULT AFTER CHECKING
APPLICATION OF FILTERING
AND THRESHOLD

1k-25 — REPORT L1 MEASUREMENT
RESULT ACCORDING TO RRC
CONFIGURED METHOD
(PUSCH/PUCCH: PERIODIC,
SEMI-PERIODIC, OR APERIODIC)

1k-30 — PERFORM L3 MEASUREMENT
AND REPORTING

1k-35 — RECEIVE HANDOVER COMMAND

# FIG. 1L

```
                    ┌─────────────┐
                    │     gNB     │
                    └──────┬──────┘
                           │
                           ▼
    ┌──────────────────────────────────────────┐
    │       PROVIDE SYSTEM INFORMATION          │──── 1I-05
    └──────────────────────┬───────────────────┘
                           │
                           ▼
    ┌──────────────────────────────────────────┐
    │  PROVIDE CONFIGURATION INFORMATION FOR TRP2│
    │ (CELL2) TO UE SUPPORTING L1/L2 BASED MOBILITY│── 1I-10
    └──────────────────────┬───────────────────┘
                           │
                           ▼
    ┌──────────────────────────────────────────┐
    │    RECEIVE L1 MEASUREMENT RESULT FROM UE   │──── 1I-15
    └──────────────────────┬───────────────────┘
                           │
                           ▼
    ┌──────────────────────────────────────────┐
    │  INDICATE BEAM SWITCHING TO BEAM OF TRP2   │
    │   (MAC CE OR DCI) (SIMULTANEOUS HO         │──── 1I-20
    │        INDICATION IS POSSIBLE)             │
    └──────────────────────┬───────────────────┘
                           │
                           ▼
    ┌──────────────────────────────────────────┐
    │   RECEIVE L3 MEASUREMENT RESULT WHILE      │──── 1I-25
    │     MAINTAINING CONNECTION WITH UE         │
    └──────────────────────┬───────────────────┘
                           │
                           ▼
    ┌──────────────────────────────────────────┐
    │  RELEASE UE CONTEXT AFTER COMPLETING       │──── 1I-30
    │         HANDOVER OPERATION                 │
    └──────────────────────────────────────────┘
```

# FIG. 1M

CONTROLLER 1m-40

MULTI-CONNECTIVITY PROCESSOR 1m-42

BASEBAND PROCESSOR 1m-20

RF PROCESSOR 1m-10

STORAGE 1m-30

# FIG. 1N

EP 4 322 612 A1

<div align="center">

**INTERNATIONAL SEARCH REPORT**

</div>

| International application No. |
|---|
| **PCT/KR2022/006583** |

| **A.** | **CLASSIFICATION OF SUBJECT MATTER** |
|---|---|

**H04W 36/00**(2009.01)i; **H04W 36/08**(2009.01)i; **H04W 16/28**(2009.01)i

According to International Patent Classification (IPC) or to both national classification and IPC

| **B.** | **FIELDS SEARCHED** |
|---|---|

Minimum documentation searched (classification system followed by classification symbols)

H04W 36/00(2009.01); H04W 24/08(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 추가 셀(additional cell), 측정(measurement), TCI, MAC CE

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | ZTE. Further details on Multi-beam and Multi-TRP operation. R1-2100292, 3GPP TSG RAN WG1 Meeting #104-e. 19 January 2021. <br> See sections 6.1 and 6.2. | 1-15 |
| Y | SAMSUNG. Summary of email discussion [AT113bis-e][035][feMIMO] L1L2 Centric Mobility ( Samsung). R2-2104632, 3GPP TSG RAN WG2 Meeting #113bis-e. 23 April 2021. <br> See sections 3, 3.1 and 3.2. | 1-15 |
| A | QUALCOMM INCORPORED. Discussion on L1/L2 mobility. R2-2103079, 3GPP TSG RAN WG2 Meeting #113bis-e. 02 April 2021. <br> See section 2.2. | 1-15 |
| A | INTEL CORPORATION. Discussion on L1/L2-Centric Inter-Cell Mobility. R2-2102870, 3GPP TSG RAN WG2 Meeting #113bis-e. 02 April 2021. <br> See section 2. | 1-15 |
| A | CN 111818564 A (VIVO MOBILE COMMUNICATION CO., LTD.) 23 October 2020 (2020-10-23) <br> See paragraphs [0040]-[0084]; and claims 1-30. | 1-15 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 August 2022** | **09 August 2022** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006583**

| Patent document cited in search report | | | Publication date (day/month/year) | Patent family member(s) | | | Publication date (day/month/year) |
|---|---|---|---|---|---|---|---|
| CN | 111818564 | A | 23 October 2020 | EP | 4009690 | A1 | 08 June 2022 |
| | | | | KR | 10-2022-0045171 | A | 12 April 2022 |
| | | | | US | 2022-0159492 | A1 | 19 May 2022 |
| | | | | WO | 2021-023062 | A1 | 11 February 2021 |

Form PCT/ISA/210 (patent family annex) (July 2019)